# EUROPEAN PATENT APPLICATION

(11) **EP 4 618 377 A1**
(43) Date of publication of application: **17.09.2025**
(21) Application number: 23888403.5
(22) Date of filing: 10.10.2023
(51) Int. Cl.: H02K 3/18, H02K 3/28, H02K 3/46

(54) **STATOR**

(30) Priority: 07.11.2022 JP 2022178136
(71) Applicant: DENSO CORPORATION, Kariya-city, Aichi 448-8661 (JP)
(72) Inventor: TANAKA, Asuka, Kariya- city, Aichi 4488661 (JP); KATO, Hidenori, Kariya- city, Aichi 4488661 (JP); YAMASHITA, Yuji, Kariya- city, Aichi 4488661 (JP); SEKI, Akihiko, Kariya- city, Aichi 4488661 (JP); TOZUKA, Takero, Kariya- city, Aichi 4488661 (JP)
(74) Representative: Kuhnen & Wacker Patent- und Rechtsanwaltsbüro PartG mbB
(86) International application number: PCT/JP2023/036720
(87) International publication number: WO 2024/101050

(57) **Abstract**

A first winding (101) and a second winding (102), which are stator windings and are respectively provided for two different phases, are wound around a predetermined tooth among a plurality of teeth of a stator core (31). The first winding is a pre-wound winding, which is wound first around the predetermined tooth, and the second winding is a post-wound winding, which is wound later around the predetermined tooth after the pre-wound winding. At the predetermined tooth, around which the first winding and the second winding are wound, the first winding is wound a plurality of times to form a plurality of layers of a conductor wire of the first winding in a first range that extends from a first end portion of the predetermined tooth, which faces radially inward or radially outward, to an intermediate position of the predetermined tooth in a radial direction, and the second winding is wound a plurality of times in a second range that extends in the radial direction from a second end portion of the predetermined tooth, which is opposite to the first end portion in the radial direction, to an overlapping position where the second winding overlaps with the first winding. A winding start end portion and a winding terminal end portion of the conductor wire of the first winding are placed at the first end portion of the predetermined tooth, and the second winding is wound such that a portion of the second winding overlaps with the first winding.

## Description

### CROSS REFERENCE TO RELATED APPLICATION

This application is based on and incorporates herein by reference Japanese Patent Application No. 2022-178136 filed on November 7, 2022.

### TECHNICAL FIELD

The present disclosure relates to a stator.

### BACKGROUND ART

In a previously known rotary electric machine having a stator and a rotor, stator windings are wound on teeth of a stator core using concentrated winding. Additionally, it is known to wind two phase windings of different phases around the same tooth (i.e., a common tooth) of the stator core. For example, the patent literature 1 discloses the configuration in which the two phase windings of the different phases are respectively wound on two regions of the tooth, which are divided in the radial direction.

### CITATION LIST

### PATENT LITERATURE

PATENT LITERATURE 1: JP5304427B2

### SUMMARY OF INVENTION

However, in the above structure where the two phase windings are wound on the two regions of the tooth divided in the radial direction, the conductor wire end portions provided for each phase winding are distributed between the radially inner side and the radially outer side. This raises concerns that terminal processing, such as connecting the conductor wire end portions with each other at a coil end or connecting each conductor wire end portion to a connection member such as a busbar, may become more complex. Additionally, in another configuration where the two phase windings are wound in a stacked state, there is a concern that when winding the two phase windings on the common tooth, post-wound winding (i.e., a later-wound winding) may interfere with the conductor wire end portions pulled out from a pre-wound winding (i.e., an earlier-wound winding).

The present disclosure has been made in view of the above issues, and it is an objective of the present disclosure to provide a stator that enables a first winding and a second winding to be optimally wound on a common tooth.

Hereinafter, there will be described measures for achieving the above objective and actions and advantages thereof.

According to measure 1, there is provided a stator including:
a stator core that includes:
   a back yoke that is shaped in a circular ring form; and
   a plurality of teeth that radially extend from the back yoke and are arranged at predetermined intervals in a circumferential direction; and
a plurality of stator windings that are provided for a plurality of phases, wherein the plurality of stator windings are formed by a plurality of conductor wires, respectively, which are wound on the plurality of teeth using concentrated winding, wherein:
   among the plurality of stator windings, a first winding and a second winding, which are respectively provided for two different phases among the plurality of phases, are wound around a predetermined tooth among the plurality of teeth, wherein the first winding is a pre-wound winding, which is wound first around the predetermined tooth, and the second winding is a post-wound winding, which is wound later around the predetermined tooth after the pre-wound winding;
   at the predetermined tooth, around which the first winding and the second winding are wound, the first winding is wound around the predetermined tooth a plurality of times to form a plurality of layers of the conductor wire of the first winding in a first range that extends from a first end portion of the predetermined tooth, which faces radially inward or radially outward, to an intermediate position of the predetermined tooth in a radial direction, and the second winding is wound around the predetermined tooth a plurality of times in a second range that extends in the radial direction from a second end portion of the predetermined tooth, which is opposite to the first end portion in the radial direction, to an overlapping position where the second winding overlaps with the first winding; and
   a winding start end portion and a winding terminal end portion of the conductor wire of the first winding are placed at the first end portion of the predetermined tooth, and the second winding is wound such that a portion of the second winding overlaps with the first winding.

In the structure where the first winding and the second winding, which correspond to the two different phases, are wound as the stator windings on the common tooth of the stator core, there is a concern that the terminal processing (terminal processing at the coil end) of these windings may possibly become more complex. Additionally, in the case where the windings are wound in a stacked state, there is a concern that the winding start end portion and the winding terminal end portion of the first winding (i.e., the pre-wound winding) may interfere with the winding process of the second winding (i.e., the post-wound winding). In this regard, at the tooth, around which the first winding and the second winding are wound, the first winding is wound around the tooth a plurality of times to form a plurality of layers of the conductor wire of the first winding in the first range that extends from the first end portion of the tooth to the intermediate position of the tooth in the radial direction. Therefore, the first winding can be more concentrated at the one radial side of the tooth, and consequently, the end portions (i.e., the winding start end portion and the winding terminal end portion) of the conductor wire of the first winding can be suitably concentrated at the first end portion side of the tooth. As a result, the inconvenience caused by the winding start end portion and the winding terminal end portion of the first winding (i.e., the pre-wound winding) interfering with the winding process of the second winding (i.e., the post-wound winding) can be suppressed. Furthermore, the second winding is wound around the tooth in the second range that extends in the radial direction from the second end portion (the other end portion) of the tooth to the overlapping position where the second winding overlaps with the first winding. Therefore, the second winding can be wound closer to the first end portion in the state where the second winding overlaps with the first winding while utilizing a vacant region around the tooth where the first winding is not wound. As a result, the end portions of the conductor wire of the second winding can also be positioned closer to the first end portion. As a result, it is possible to optimally wind the first winding and the second winding around the common tooth.

According to measure 2, the first winding is wound such that a winding start position of the first winding is at the first end portion, and a winding terminal position of the first winding is where the conductor wire of the first winding at the winding terminal position overlaps with the conductor wire of the first winding at the winding start position of the first winding; and the second winding is wound such that a winding start position of the second winding is on a radial side of the winding start position of the first winding where a tooth center of the predetermined tooth, which is centered between two opposite radial ends of the predetermined tooth in the radial direction, is placed, and the second winding is wound from the winding start position of the second winding toward the tooth center.

According to the above structure, the first winding is wound such that the winding start position of the first winding is at the first end portion of the tooth, and the winding terminal position of the first winding is where the conductor wire of the first winding at the winding terminal position overlaps with the conductor wire of the first winding at the winding start position of the first winding. With this structure, it is possible to achieve the appropriate configuration where the first winding is concentrated at the one radial side of the tooth. Furthermore, the second winding is wound such that the winding start position of the second winding is on the radial side of the winding start position of the first winding where the tooth center of the tooth, which is centered between the two opposite radial ends of the tooth in the radial direction, is placed, and the second winding is wound from the winding start position of the second winding toward the tooth center. Thus, the second winding can be optimally wound while avoiding interference with the end portions of the first winding.

According to measure 3, each of the plurality of conductor wires is a round wire with a circular-cross section, and the first winding and the second winding are wound around the predetermined tooth in a staggered arrangement in which the conductor wire of the first winding and the conductor wire of the second winding are staggered; and the second winding is wound such that the winding start position of the second winding is spaced from the first end portion by an amount that corresponds to one turn of the conductor wire of the second winding.

In the structure where the round wires are used as the conductor wires, the space factor can be improved by winding the first winding and the second winding in the staggered arrangement. Additionally, according to the staggered arrangement of the round wires, it becomes relatively easy to adjust the radial position for the winding start position of the second winding, and the interference of the second winding with the end portions of the first winding can be effectively avoided.

The stator according to measure 4, the second winding is wound around the predetermined tooth such that the second winding starts from the winding start position adjacent to the first end portion, extends toward the second end portion, and folds back at the second end portion to wind the conductor wire of the second winding in a plurality of layers over the predetermined tooth.

According to the above configuration, the winding start and the winding terminal of the conductor wire of each of the first winding and the second winding can be concentrated at the first end portion side of the tooth. Therefore, the workability of terminal processing can be improved at the time of, for example, connecting a plurality of first windings, which constitute the stator windings, or connecting a plurality of second windings, which constitute the stator windings.

According to measure 5, the predetermined tooth is provided with a projection which is placed at a boundary position of the first range where the first winding is wound, wherein the boundary position of the first range is opposite to the first end portion in the radial direction, and the projection extends in a direction perpendicular to the radial direction and away from a tooth surface of the predetermined tooth.

As described above, in the case where the first winding is wound the plurality of times to form the plurality of layers of the conductor wire of the first winding in the first range that extends from the first end portion of the tooth to the intermediate position of the tooth in the radial direction, there arises a concern about collapse of the first winding due to displacement of the conductor wire of the first winding at the intermediate position of the tooth. In this regard, since the projection is provided at the boundary position of the first range (the boundary on the intermediate position side) where the first winding is wound on the tooth, the collapse of the first winding can be limited.

According to measure 6, at least one electrical insulation member is placed on at least one of two opposite axial end portions of the predetermined tooth, and the first winding and the second winding are wound in a state where the at least one electrical insulation member is interposed between the predetermined tooth and each of the first winding and the second winding; and
the at least one electrical insulation member has a first insulation portion, which corresponds to the first range in the radial direction, and a second insulation portion, which is a portion of the at least one electrical insulation member located outside of the first range, and an axial wall thickness dimension of the first insulation portion and an axial wall thickness dimension of the second insulation portion are set differently such that the axial wall thickness dimension of the first insulation portion is smaller than the axial wall thickness dimension of the second insulation portion.

In the at least one electrical insulation member placed on the at least one of the two opposite axial end portions of the tooth, the axial wall thickness dimension of the first insulation portion, which corresponds to the first range, and the axial wall thickness dimension of the second insulation portion, which is located outside of the first range, are set differently such that the axial wall thickness dimension of the first insulation portion is smaller than the axial wall thickness dimension of the second insulation portion. In this case, a step can be formed between the first insulation portion and the second insulation portion, and this step can limit the collapse of the first winding.

Additionally, on the tooth, both the first winding and the second winding are wound in a stacked state in the first range, whereas only the second winding is wound in the range outside the first range. In this configuration, since the axial wall thickness dimension of the first insulation portion, which corresponds to the first range, is smaller than the axial wall thickness dimension of the second insulation portion, an axial length dimension in the first range is limited from becoming excessively larger than in the other region, enabling uniformity in the winding axial length dimension along the tooth in the radial direction of the tooth.

According to measure 7, the plurality of stator windings include a plurality of phase windings, each of which is provided for a corresponding one of the plurality of phases and is wound around corresponding two or more of the plurality of teeth using the concentrated winding;
three teeth among the plurality of teeth, which are consecutively arranged in the circumferential direction in the stator core, are defined as a first tooth, a second tooth and a third tooth, wherein a first phase winding among the plurality of phase windings is wound continuously around the first tooth and the second tooth, and a second phase winding among the plurality of phase windings is wound continuously around the second tooth and the third tooth, and thereby the second tooth is wound with the first phase winding and the second phase winding;
one end portion of the first phase winding is pulled out from one of two opposite radial end portions of the first tooth, which is adjacent to the back yoke, and another end portion of the first phase winding is pulled out from one of two opposite radial end portions of the second tooth which is adjacent to the back yoke;
one end portion of the second phase winding is pulled out from one of two opposite radial end portions of the third tooth, which is adjacent to the back yoke, and another end portion of the second phase winding is pulled out from the one of the two opposite radial end portions of the second tooth which is adjacent to the back yoke; and
among the first phase winding and the second phase winding, the first phase winding is a pre-wound winding, which is wound first at a time of winding the first phase winding and the second phase winding, and the second phase winding is a post-wound winding, which is wound later after the pre-wound winding, wherein the first phase winding has a link portion, which extends between the first tooth and the second tooth along the back yoke in the circumferential direction to continuously extend the first phase winding between the first tooth and the second tooth.

For example, in order to reduce the ripple electric current in the stator, it is conceivable to wind two phase windings of different phases (the first phase winding and the second phase winding) on three teeth consecutively arranged in the circumferential direction. Specifically, in the stator core, it is conceivable to continuously wind the first phase winding around the first tooth and the second tooth, respectively, among the first to third teeth consecutively arranged in the circumferential direction in the stator core, and to continuously wind the second phase winding around the second tooth and the third teeth, respectively. Furthermore, in the structure described above, the one end portion of the first phase winding is pulled out from the radial end portion of the first tooth, which is adjacent to the back yoke, and the other end portion of the first phase winding is pulled out from the radial end portion of the second tooth which is adjacent to the back yoke, and the one end portion of the second phase winding is pulled out from the radial end portion of the third tooth, which is adjacent to the back yoke, and the other end portion of the second phase winding is pulled out from the radial end portion of the second tooth which is adjacent to the back yoke. This allows for the optimal implementation of connecting the conductor wire end portions of each phase winding to the power source and the neutral point while grouping the three teeth together as one set. Furthermore, the first phase winding, which is the pre-wound winding, has the link portion, which extends between the first tooth and the second tooth along the back yoke in the circumferential direction to continuously extend the first phase winding between the first tooth and the second tooth. Therefore, the plurality of conductor wire end portions generated for the tooth basis are all processed at the back yoke side.

According to measure 8, at least one electrical insulation member is placed on at least one of two opposite axial end portions of the stator core and is configured to electrically insulate between one or more of the plurality of teeth and one or more of the plurality of stator windings; the at least one electrical insulation member has at least one rising portion, wherein the at least one rising portion is placed on the one or more of the plurality of teeth at a location adjacent to the back yoke and axially extends; and the at least one rising portion has a plurality of holding portions that hold: the link portion, which forms one end portion among a winding start end portion and a winding terminal end portion of the first phase winding wound around the second tooth; and another end portion among the winding start end portion and the winding terminal end portion of the first phase winding.

In the structure where the first phase winding is continuously wound around the first tooth and the second tooth, the link portion, which extends from the first tooth, forms the winding start end portion of the first winding, and the other end portion of the first winding is the winding terminal end portion of the first winding. Alternatively, the link portion, which extends from the first tooth, may form the winding terminal end portion of the first winding, and the other end portion of the first winding may be the winding start end portion of the first winding. In this case, the rising portion formed at the back yoke side of the electrical insulation member is used to hold the winding start end portion and the winding terminal end portion of the first winding. As a result, the winding start end portion and the winding terminal end portion of the first winding can be held on the back yoke side, thereby effectively avoiding interference during the winding process of the second winding.

### BRIEF DESCRIPTION OF DRAWINGS

The present disclosure, together with additional objectives, features and advantages thereof, will be best understood from the following description in view of the accompanying drawings.
FIG. 1 is a longitudinal cross-sectional view of an electric motor.
FIG. 2 is a transverse cross-sectional view of the electric motor.
FIG. 3 is a diagram showing an electrical structure of a control device.
FIG. 4 is a perspective view of a stator.
FIG. 5 is a plan view of the stator.
FIG. 6 is a perspective view showing a structure of a stator core.
FIG. 7 is a winding configuration diagram of stator windings.
FIG. 8 is a diagram showing a corresponding relationship of each winding segment of the stator windings relative to its corresponding tooth.
FIG. 9 is a diagram showing a structure of a segmented core.
FIG. 10 is a perspective view showing a state in which the winding segments are wound on one tooth group.
FIG. 11 is a diagram showing a winding order of conductor wires at a center tooth A2 of the tooth group.
FIG. 12 is a perspective view showing a winding structure at the tooth A2.
FIG. 13 is a perspective view of a busbar module.
FIG. 14 is a perspective view showing structures of busbars.
FIG. 15 is a perspective view showing a structure of a busbar holder.
FIG. 16 is a perspective view showing a state where the busbar module is installed to the stator.
FIG. 17 is a diagram showing a state in which windings are wound around one tooth according to another example.
FIG. 18 is a diagram showing a state in which windings are wound around one tooth according to another example.
FIG. 19 is a diagram showing a state in which windings are wound around one tooth according to another example.
FIG. 20 is a winding configuration diagram of stator windings according to another example.

### DESCRIPTION OF EMBODIMENTS

### (First Embodiment)

Hereinafter, embodiments will be described with reference to the drawings. Among the following embodiments, portions, which are the same or equivalent to each other, will be indicated by the same reference signs, and redundant description of these portions are omitted for the sake of simplicity. In the first embodiment, an electric motor 10, which serves as a rotary electric machine, is exemplified and is explained.

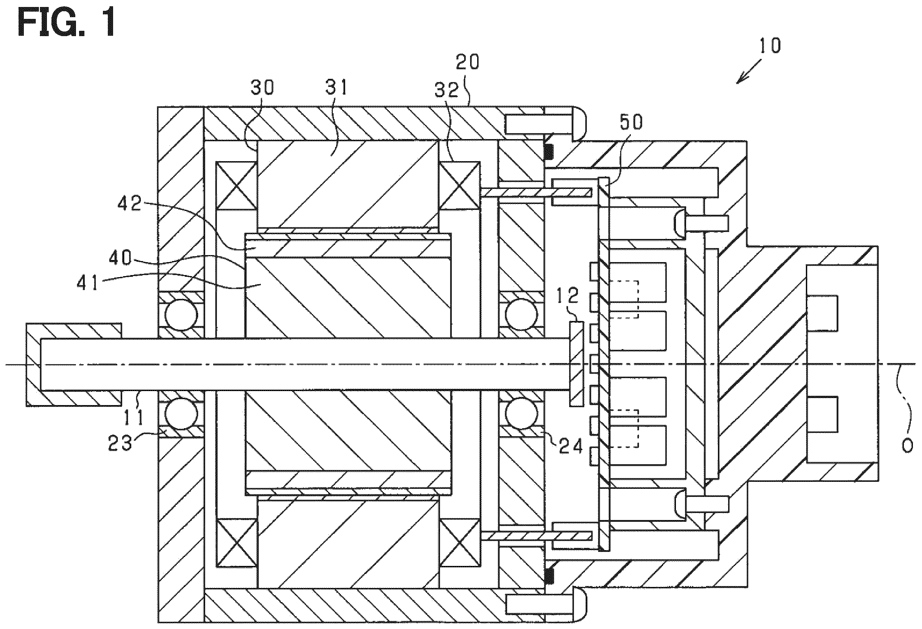

The electric motor 10 shown in FIG. 1 is a permanent magnet field motor, specifically a permanent magnet synchronous machine having three-phase windings. In other words, the electric motor 10 is a brushless motor. The three-phase windings may include two systems of three phase windings. The electric motor 10 includes: a housing 20; a stator 30 that is fixed to the housing 20; a rotor 40 that rotates relative to the stator 30; and a rotatable shaft 11 to which the rotor 40 is fixed. In the present embodiment, an axial direction refers to an axial direction of a central axis of the rotatable shaft 11, and a radial direction refers to a radial direction of the central axis of the rotatable shaft 11. Furthermore, a circumferential direction refers to a circumferential direction around the central axis of the rotatable shaft 11.

The housing 20 is shaped in a cylindrical tubular form, and the stator 30 and the rotor 40 are received in the housing 20. Two bearings 23, 24 are installed in the housing 20, and the rotatable shaft 11 is rotatably supported by the bearings 23, 24. A central axis of an inner peripheral surface of the housing 20 is coaxial with the central axis of the rotatable shaft 11. An angle sensor 12 is installed to an axial end portion of the rotatable shaft 11. The angle sensor 12 may be a magnetic sensor or a resolver.

The stator 30 is axially placed generally at a center portion of the housing 20 and is shaped in a cylindrical tubular form along an inner periphery of the housing 20. The stator 30 is fixed to an inner peripheral surface of the housing 20 such that the stator 30 is centered on the central axis O of the rotatable shaft 11. The stator 30 forms part of a magnetic circuit. The stator 30 includes: a stator core 31 which is shaped in a circular ring form and is positioned on a radially outer side of the rotor 40; and a plurality of stator windings 32 which are wound on the stator core 31.

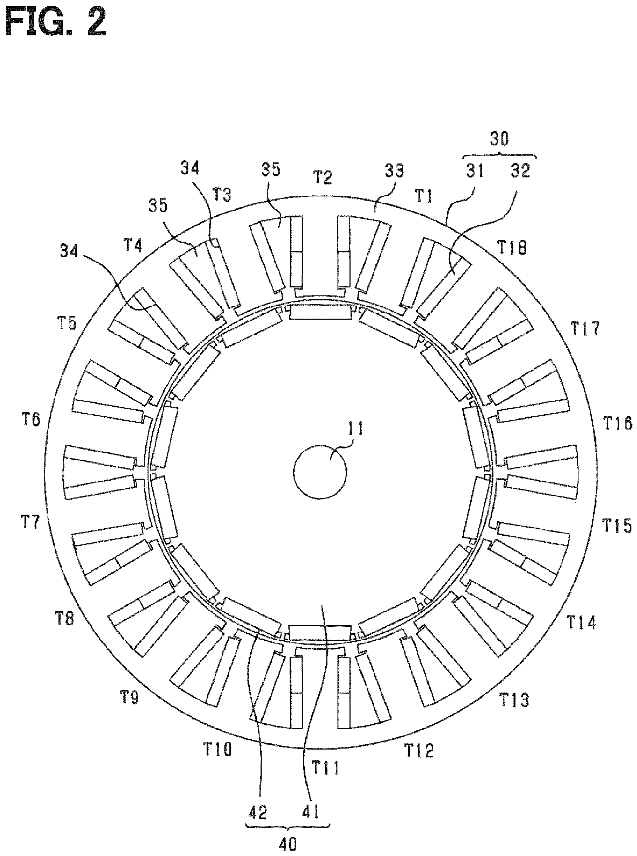

As shown in FIG. 2, the stator core 31 includes: a back yoke 33 which is shaped in a circular ring form; and a plurality of teeth 34 which radially inwardly project from the back yoke 33 and arranged at predetermined intervals in the circumferential direction. Each of a plurality of slots 35 is formed between corresponding adjacent two of the teeth 34. In the stator core 31, the teeth 34 are arranged at equal intervals in the circumferential direction, and the stator windings 32 are wound on these teeth 34. As a result, conductors of the stator windings 32 are respectively received in each corresponding one of the slots 35. In the present embodiment, the number of the teeth 34 and the number of the slots 35 are each set to 18. For the sake of explanation, the teeth 34 are designated with reference signs T1 to T18, respectively, in this order in a counterclockwise direction along the circumferential direction. When it is necessary to indicate the tooth number, the teeth 34 are also referred to as teeth T1, T2, T3, and so on. The stator windings 32 are held in a state where the stator windings 32 are respectively received in each corresponding one of the slots 35, and the stator windings 32 generate a magnetic flux when an electric power (AC power) is supplied to the stator windings 32.

The stator core 31 is formed by stacking a plurality of thin steel plates (core sheets), which are made of a magnetic material, in the axial direction of the stator core 31. The steel plates may be formed, for example, by pressing and punching a strip of electromagnetic steel sheet.

The rotor 40 forms part of the magnetic circuit. The rotor 40 has a plurality of magnetic poles arranged in the circumferential direction and are opposed to the stator 30 in the radial direction. In the present embodiment, the number of the magnetic poles of the rotor 40 is 14 (i.e., the number of magnetic pole pairs is 7). The rotor 40 includes: a rotor core 41 made of a magnetic material; and a plurality of permanent magnets 42 fixed to the rotor core 41. Specifically, as shown in FIG. 2, the rotor 40 has fourteen permanent magnets 42, which serve as magnet parts and are arranged to form alternating polarities in the circumferential direction. These permanent magnets 42 are embedded in receiving holes of the rotor core 41 each of which extends in the axial direction of the rotor core 41.

The rotor 40 may have a known structure, such as an IPM (Interior Permanent Magnet) type rotor or an SPM (Surface Permanent Magnet) type rotor. Additionally, a field winding type rotor may be employed as the rotor 40. In the present embodiment, the IPM type rotor is employed. The rotatable shaft 11 is inserted through the rotor 40 such that the rotor 40 is fixed to the rotatable shaft 11 to rotate integrally with the rotatable shaft 11 about the rotatable shaft 11.

A control device 50 is connected to the electric motor 10. The control device 50 includes a microcomputer, which has a CPU, a ROM, a RAM and I/O device, as a main component of the control device 50. The control device 50 implements various functions when the CPU executes a program(s) stored in the ROM. The various functions may be realized by an electronic circuit(s), which is hardware, or at least partially by software, i.e., processes executed on the computer.

One of the functions of the control device 50 is a function of converting the electric power supplied from an external source (e.g., a battery) and supplying the converted electric power to the electric motor 10 to generate a drive force at the electric motor 10. Additionally, for example, the control device 50 also has a function of controlling the electric motor 10 (such as electric current control) by using information about the rotational angle inputted from the angle sensor 12.

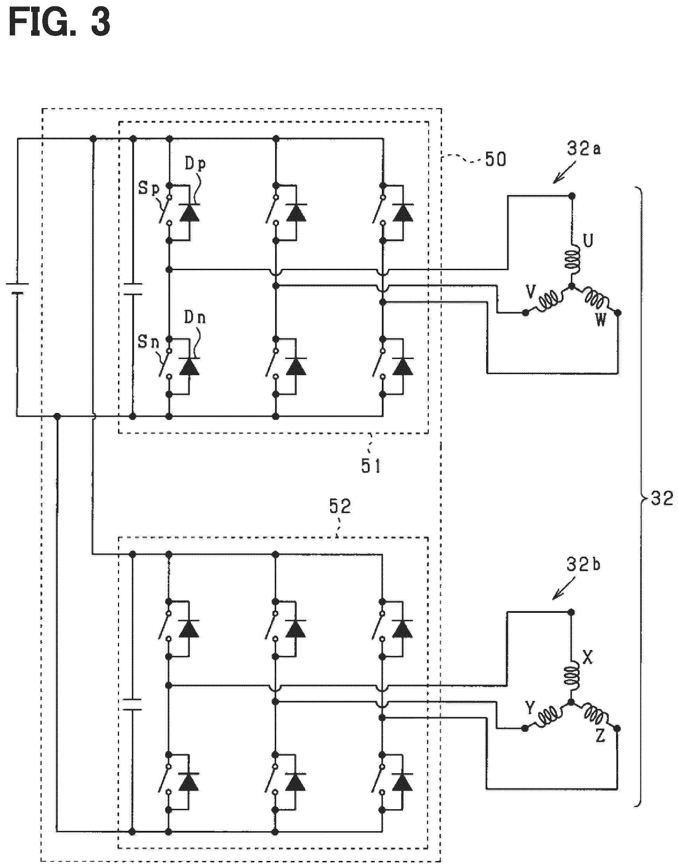

FIG. 3 is a diagram showing an electrical structure of the control device 50 according to the present embodiment.

In the present embodiment, the stator windings 32 include a first set of stator windings 32a and a second set of stator windings 32b. The control device 50 includes a first inverter circuit 51 and a second inverter circuit 52 which are respectively provided to the first set of stator windings 32a and the second set of stator windings 32b. Each inverter circuit 51, 52 is formed by a full-bridge circuit that includes a plurality of pairs of upper and lower arms while the number of the pairs of upper and lower arms is equal to the number of phases of the three-phase system. The control device 50 controls the electric current in each phase by turning the switching device provided in each corresponding arm on and off.

Specifically, the first inverter circuit 51 includes a series connection of an upper arm switch Sp and a lower arm switch Sn as switching devices for each of the three phases, i.e., a U-phase, a V-phase and a W-phase. In the present embodiment, a voltage-controlled semiconductor switching device is used as each of the upper arm switch Sp and the lower arm switch Sn for each phase, specifically using an IGBT (Insulated Gate Bipolar Transistor). Alternatively, a MOSFET (Metal-Oxide-Semiconductor Field-Effect Transistor) may be used. A freewheeling diode (recirculating diode) Dp, Dn is connected in reverse parallel to each of the upper arm switch Sp and the lower arm switch Sn for each phase.

A high-potential side terminal (collector) of the upper arm switch Sp for each phase is connected to a positive terminal of the battery. Additionally, a low-potential side terminal (emitter) of the lower arm switch Sn for each phase is connected to a negative terminal (ground) of the battery. An intermediate connection point between the upper arm switch Sp and the lower arm switch Sn for each phase is connected to one end of a corresponding phase winding among the first set of stator windings 32a. The first set of stator windings 32a includes a U-phase winding, a V-phase winding and a W-phase winding. In the first inverter circuit 51, one end of each of the U-phase winding, the V-phase winding and the W-phase winding is connected to the corresponding intermediate connection point between the corresponding upper arm switch Sp and the corresponding lower arm switch Sn.

Since the second inverter circuit 52 has the same structure as the first inverter circuit 51, a detailed explanation of the second inverter circuit 52 is omitted here. The second set of stator windings 32b include an X-phase winding, a Y-phase winding and a Z-phase winding. In the second inverter circuit 52, one end of each of the X-phase winding, the Y-phase winding and the Z-phase winding is connected to the intermediate connection point between the corresponding upper arm switch Sp and the corresponding lower arm switch Sn.

The three-phase current supplied from the first inverter circuit 51 and the three-phase current supplied from the second inverter circuit 52 have a predetermined current phase difference from each other.

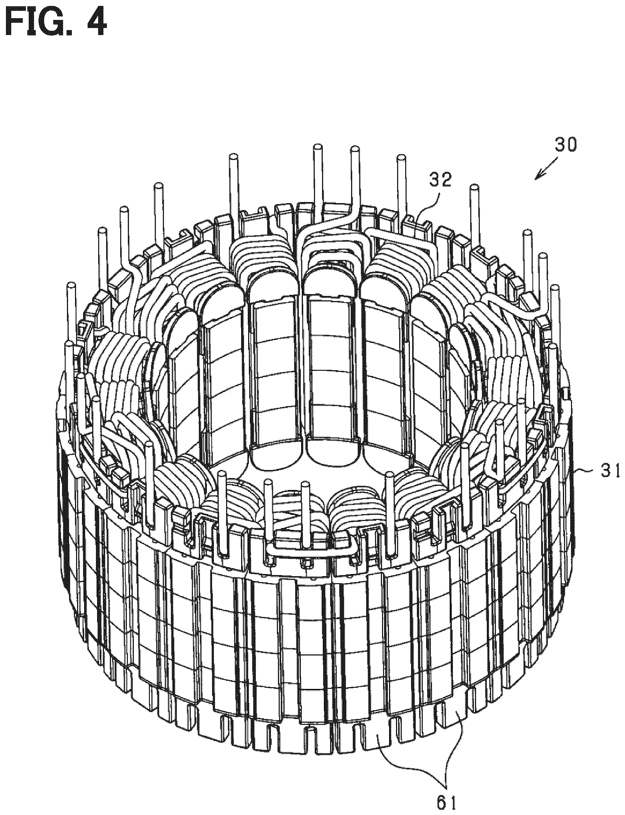

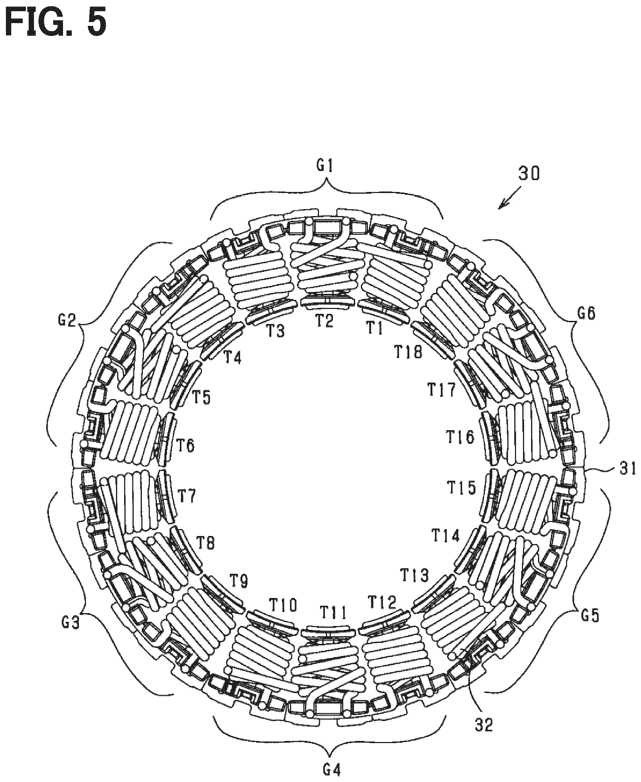

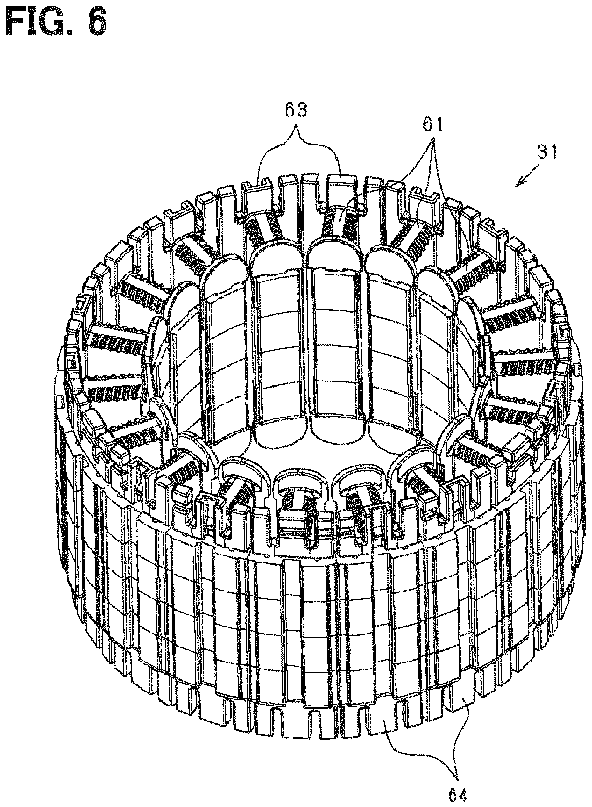

Hereinafter, the structure of the stator 30 will be described in detail. FIG. 4 is a perspective view of the stator 30, and FIG. 5 is a plan view of the stator 30. Furthermore, FIG. 6 is a perspective view showing a structure of the stator core 31. The stator 30 shown in FIGS. 4 and 5 corresponds to the stator 30 shown in FIG. 2.

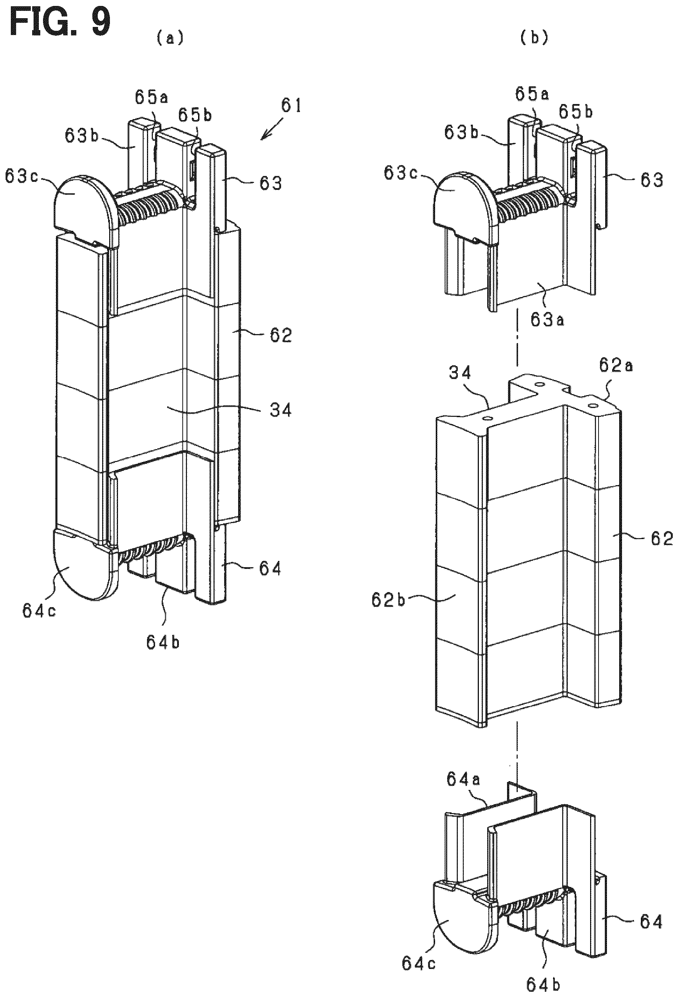

In the stator 30, the stator core 31 is formed by a plurality of segmented cores 61. These segmented cores 61 are arranged in the circumferential direction, forming the stator core 31 into a cylindrical tubular form. Each segmented core 61 has the corresponding tooth 34 (see (a) of FIG. 9). When the segmented cores 61 are arranged in the circumferential direction, the teeth 34 and slots 35 are alternately arranged in the circumferential direction as shown in FIG. 2. In the present embodiment, the stator core 31 is formed by eighteen segmented cores 61. Each of the stator windings 32 is formed by using a round wire with a circular cross-section as the conductor wire, and this conductor wire is wound around each corresponding tooth 34 by concentrated winding.

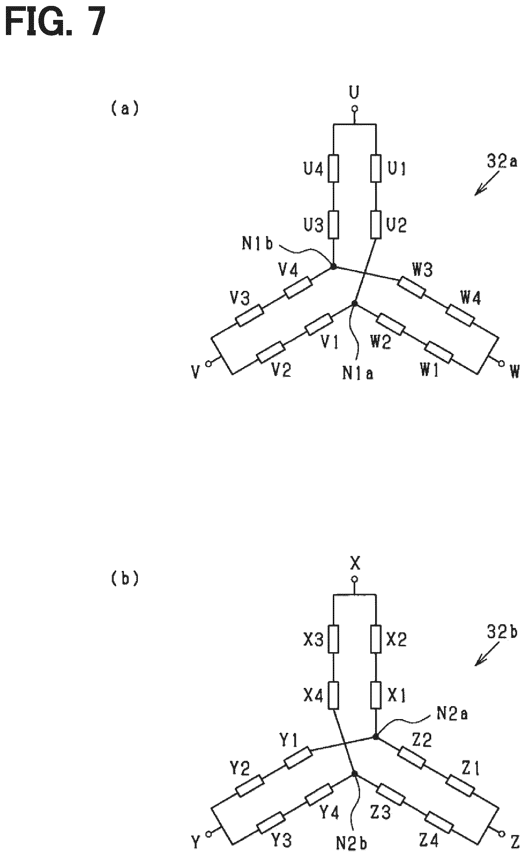

FIG. 7 is a winding configuration diagram of the stator windings 32 according to the present embodiment. Here, (a) of FIG. 7 shows the configuration of the U-phase winding, the V-phase winding and the W-phase winding of the first set of stator windings 32a. Furthermore, (b) of FIG. 7 shows the configuration of the phase windings for the X-phase winding, the Y-phase winding and the Z-phase winding of the second set of stator windings 32b. In each set of stator windings 32a, 32b, the phase windings are connected with each other by a star connection (Y-connection).

As shown in (a) of FIG. 7, in the first set of stator windings 32a, the U-phase winding includes four winding segments U1, U2, U3, U4, and the V-phase winding includes four winding segments V1, V2, V3, V4, and the W-phase winding include four winding segments W1, W2, W3, W4. One end of a series-connected winding section with the winding segments U1, U2 connected in series, one end of a series-connected winding section with the winding segments V1, V2 connected in series, and one end of a series-connected winding section with the winding segments W1, W2 connected in series are connected together at a neutral point N1a. Furthermore, one end of a series-connected winding section with the winding segments U3, U4 connected in series, one end of a series-connected winding section with the winding segments V3, V4 connected in series, and one end of a series-connected winding section with the winding segments W3, W4 connected in series are connected together at a neutral point N1b.

As shown in (b) of FIG. 7, in the second set of stator windings 32b, the X-phase winding includes four winding segments X1, X2, X3, X4, and the Y-phase winding includes four winding segments Y1, Y2, Y3, Y4, and the Z-phase winding includes four winding segments Z1, Z2, Z3, Z4. One end of a series-connected winding section with the winding segments X1, X2 connected in series, one end of a series-connected winding section with the winding segments Y1, Y2 connected in series, and one end of a series-connected winding section with the winding segments Z1, Z2 connected in series are connected together at a neutral point N2a. Furthermore, one end of a series-connected winding section with the winding segments X3, X4 connected in series, one end of a series-connected winding section with the winding segments Y3, Y4 connected in series, and one end of a series-connected winding section with the winding segments Z3, Z4 connected in series are connected together at a neutral point N2b.

Besides the above-described configuration where in each set of stator windings 32a, 32b, the four winding segments of each phase winding are divided to form two series-connected winding sections each with the two winding segments connected in series, and the corresponding series-connected winding sections are connected together to form the star connection, the following arrangement may be employed. That is, in each set of stator windings 32a, 32b, the four winding segments of each phase winding may be divided to form two winding sections connected in parallel, and the corresponding winding sections may be connected together to form the star connection. In this case, the two neutral points (N1a, N1b) in the first set of stator windings 32a are integrated into one neutral point, and the two neutral points (N2a, N2b) in the second set of stator windings 32b are also integrated into one neutral point.

The winding segments U1-U4, V1-V4, W1-W4 of the respective phases in the first set of stator windings 32a, and the winding segments X1-X4, Y1-Y4, Z1-Z4 of the respective phases in the second set of stator windings 32b are wound on the teeth 34 of the stator core 31 using concentrated winding. In the present embodiment, the twelve winding segments of the first set of stator windings 32a and the twelve winding segments of the second set of stator windings 32b are distributed and wound on the eighteen teeth 34 of the stator core 31. Hereinafter, this feature will be described in detail.

In the stator core 31, the total of eighteen teeth 34 are divided into a plurality of tooth groups each of which is formed by corresponding three of the teeth 34, and the winding segments of corresponding two different phase windings are wound on these three teeth 34 of each tooth group. Specifically, as shown in FIG. 5, in the stator 30, all of the teeth 34 (T1-T18) of the stator core 31 are divided into six tooth groups G1-G6. Corresponding two of the winding segments U1-U4, V1-V4, W1-W4 of the first set of stator windings 32a and corresponding two of the winding segments X1-X4, Y1-Y4, Z1-Z4 of the second set of stator windings 32b are distributed to and are wounded at each corresponding tooth group G1-G6. In this case, at each tooth group G1-G6, one of the two winding segments of the corresponding one of the first set of stator windings 32a is wound around one of circumferentially opposite two of the three teeth 34, and one of the two winding segments of the corresponding one of the second set of stator windings 32b is wound around the other one of the circumferentially opposite two of the three teeth 34. Furthermore, at each tooth group G1-G6, the other one of the two winding segments of the corresponding one of the first set of stator windings 32a and the other one of the winding segments of the corresponding one of the second set of stator windings 32b are wound around the center tooth among the three teeth 34.

Here, it is assumed that in each of the tooth groups G1-G6, the three teeth 34, which are consecutively arranged in the circumferential, are defined as a first tooth, a second tooth and a third tooth, respectively, in this order. Among the phase windings, two winding segments of a first phase winding are wound continuously around the first tooth and the second tooth, respectively, and two winding segments of a second phase winding are wound continuously around the second tooth and the third tooth, respectively. Among the three consecutive teeth 34, the center tooth, which is the second tooth, serves as a common tooth around which both the first phase winding and the second phase winding are wound. In this case, the first phase winding is any one of the six phase windings in the first and second sets of stator windings 32a, 32b, and the second phase winding is a different phase winding, which is different from the first phase winding among the same six phase windings.

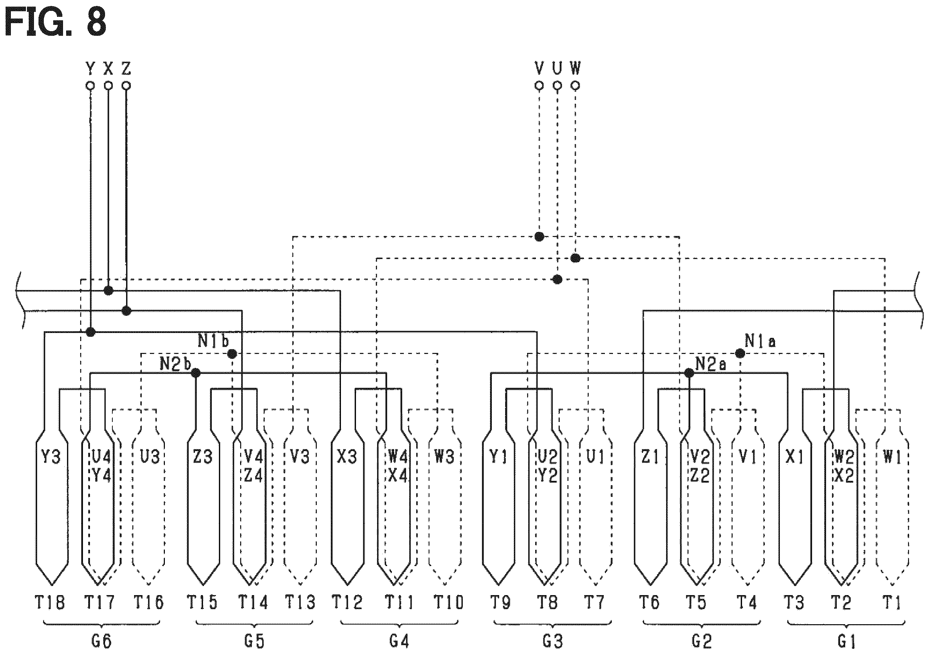

FIG. 8 is a diagram showing a corresponding relationship of each of the winding segments of the stator windings 32a, 32b relative to its corresponding tooth T1-T18. In FIG. 8, in, for example, the tooth group G1, the winding segment W1 of one of the second set of stator windings 32b is wound around the tooth T1, and the winding segment W2 of the one of the second set of stator windings 32b and the winding segment X2 of one of the first set of stator windings 32a are wound around the tooth T2, and the winding segment X1 of the one of the first set of stator windings 32a is wound around the tooth T3. These three teeth T1-T3 serve as first to third teeth, respectively. The explanation for the other tooth groups G2-G6 is omitted, but the winding segments at each of the remaining tooth groups G2-G6 are wound in the same manner as that of the tooth group G1. Furthermore, the three teeth in each of the other groups G2-G6 serve as the first to third teeth respectively.

The winding structure of each winding segment in each tooth group will be explained below. Here, prior to explaining the winding structure of each winding segment, the structure of the stator core 31 will be described in more detail.

In FIG. 9, (a) is a perspective view of the segmented core 61, and (b) is an exploded perspective view of the segmented core 61. The segmented core 61 includes: a core main body 62, which is a steel sheet laminate; and two electrical insulation members 63, 64, which are provided at one axial end and the other axial end (the upper and lower sides in the drawing) of the core main body 62. The core main body 62 includes: the tooth 34 extending in the radial direction (the radial direction of the stator core 31); a yoke portion 62a formed at one end of the tooth 34 in the radial direction; and a flange portion 62b formed at the other end of the tooth 34 in the radial direction. The yoke portion 62a corresponds to the back yoke 33 of the stator core 31 shown in FIG. 2. In the state where the plurality of segmented cores 61 are arranged in the circumferential direction, the yoke portions 62a of each adjacent two of the segmented cores 61 are coupled with each other, forming the back yoke 33 in a circular ring form. It is preferable that the yoke portions 62a of the adjacent segmented cores 61 are joined together by an adhesive or other means.
the electrical insulation members 63, 64 are made of, for example, a dielectric resin material and are installed to the two opposite axial ends, respectively, of the tooth 34. The electrical insulation member 63 includes: a covering portion 63a that covers an axial end surface (the upper surface in the drawing) of the tooth 34; and two rising portions 63b, 63c which are provided at one radial end and the other radial end, respectively, of the covering portion 63a and extend in the axial direction (the upward direction in the drawing). The rising portion 63b is positioned on the yoke portion 62a side of the tooth 34 in the radial direction, i.e., on the proximal end side of the tooth 34. Furthermore, the rising portion 63c is positioned on the opposite side of the tooth 34 opposite to the yoke portion 62a in the radial direction, i.e., on the distal end side of the tooth 34. The rising portion 63b has two grooves 65a, 65b which are arranged one after another in the circumferential direction. Each of the grooves 65a, 65b is configured to receive the conductor wire of the corresponding winding segment. Similarly, the electrical insulation member 64 includes a covering portion 64a and two rising portions 64b, 64c.

The segmented core 61 is formed by installing the electrical insulation members 63, 64 to the core main body 62, and the corresponding conductor wire is wound a plurality of times across each electrical insulation member 63, 64, thereby winding the winding segment around the tooth 34 of the segmented core 61.

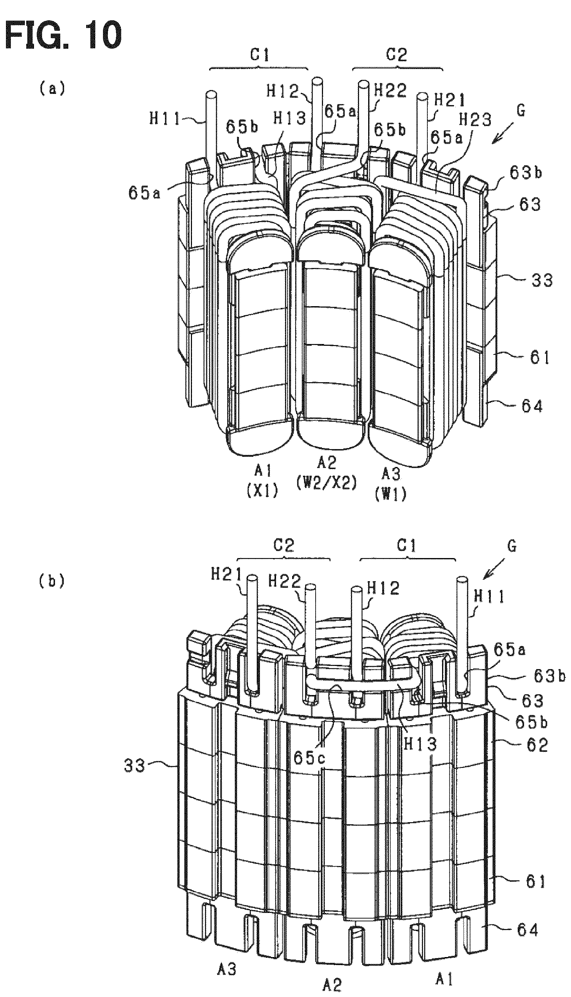

FIG. 10 is a perspective view showing the state where the winding segments are wound on one of the tooth groups G, with (a) in FIG. 10 being a perspective view taken from the radially inner side of the one of the tooth groups G, and (b) in FIG. 10 being a perspective view taken from the radially outer side of the one of the tooth groups G.

In (a) and (b) of FIG. 10, in the tooth group G, three teeth 34, which are arranged consecutively in the circumferential direction, are defined as a tooth A1 (a first tooth), a tooth A2 (a second tooth) and a tooth A3 (a third tooth) in the order of their arrangement in the circumferential direction. The first phase winding C1 is continuously wound around the tooth A1 and the tooth A2, and the second phase winding C2 is continuously wound around the tooth A2 and the tooth A3. Among the teeth A1-A3, the center tooth A2, which is centered among the teeth A1-A3, serves as a common tooth around which both the first phase winding C1 and the second phase winding C2 are wound. The tooth group G shown in (a) and (b) of FIGS. 10 corresponds, for example, to the tooth group G1 shown in FIGS. 2 and 8. Furthermore, the tooth T1 of the tooth group G1 in FIGS. 2 and 8 corresponds to the tooth A3 of the tooth group G in (a) and (b) of FIGS. 10, and the tooth T2 of the tooth group G1 in FIGS. 2 and 8 corresponds to the tooth A2 of the tooth group G in (a) and (b) of FIGS. 10. Additionally, the tooth T3 of the tooth group G1 in FIGS. 2 and 8 corresponds to the tooth A1 of the tooth group G in (a) and (b) of FIGS. 10. In other words, in (a) and (b) of FIG 10, winding segments X1, X2 of the first phase winding C1 are wound around the teeth A1, A2, and winding segments W1, W2 of the second phase winding C2 are wound around the teeth A2, A3. Among the first phase winding C1 and the second phase winding C2, the first phase winding C1 is a pre-wound winding, which is wound first at a time of winding the first phase winding C1 and the second phase winding C2, and the second phase winding C2 is a post-wound winding, which is wound later after the pre-wound winding.

In the first phase winding C1, which is the pre-wound winding, the conductor wire is wound in the order of the tooth A1 and then the tooth A2 during the winding process of the conductor wire. At these teeth A1, A2, a winding direction of the conductor wire (the conductor wire segment) around the tooth A1 and a winding direction of the conductor wire (the conductor wire segment) around the tooth A2 are opposite to each other. In (a) of FIG. 10, the conductor wire (the conductor wire segment) is wound around the tooth A1 in the counterclockwise direction with the number of turns Na, and is then wound around the tooth A2 in the clockwise direction with the number of turns Nb. In the first phase winding C1, one conductor wire end portion of the first phase winding C1, which forms a winding start side of the first phase winding C1, and another conductor wire end portion of the first phase winding C1, which forms a winding terminal side of the first phase winding C1, are pulled out from the segmented cores 61 in the axial direction and form a lead-out portion H11 and a lead-out portion H12, respectively, each of which extends a predetermined length from the corresponding segmented core 61.

The lead-out portion H11 at the winding start side is pulled out from the proximal end portion (the back yoke 33 side) of the tooth A1, and the lead-out portion H12 at the winding terminal side is pulled out from the proximal end portion (the back yoke 33 side) of the tooth A2. In this case, particularly, the grooves 65a, 65b are formed at the rising portion 63b of the electrical insulation member 63 of each segmented core 61, and the lead-out portion H11 is pulled out in a state where the lead-out portion H11 is inserted into the groove 65a of the electrical insulation member 63 which corresponds to the tooth A1. Furthermore, the lead-out portion H12 is pulled out in a state where the lead-out portion H12 is inserted into the groove 65a of the electrical insulation member 63 which corresponds to the tooth A2.

A portion of the first phase winding C1, which is located between and couples the winding segment X1 wound around the tooth A1 and the winding segment X2 wound around the tooth A2, forms a link portion H13 that spans between these teeth A1, A2. This link portion H13 is guided to the outside of the rising portion 63b of the electrical insulation member 63. Specifically, the link portion H13 is a conductor wire section between a tooth winding terminal position of the winding segment X1 and a tooth winding start position of the winding segment X2, and this link portion H13 is pulled out to the outside of the rising portion 63b between the groove 65b at the tooth A1 and the groove 65b at the tooth A2. As shown in (b) of FIG. 10, a guide groove 65c is formed at outer surfaces of the adjacent rising portions 63b, and the link portion H13 is guided in a state where the link portion H13 is installed into the guide groove 65c.

In the second phase winding C2, which is the post-wound winding, the conductor wire is wound in the order of the tooth A3 and then the tooth A2 during the winding process of the conductor wire. Here, the first and second phase windings C1, C2 are compared. The winding process of the first and second phase windings C1, C2 is performed such that each of the first and second phase windings C1, C2 is wound in an opposite sequence in the circumferential direction compared to the other one of the first and second phase windings C1, C2 from one of the corresponding circumferentially adjacent two of the teeth to the other one of the circumferentially adjacent two of the teeth. In other words, in the first phase winding C1, which is the pre-wound winding, the two winding segments X1, X2 are wound from left to right in (a) of FIG. 10. In contrast, in the second phase winding C2, which is the post-wound winding, the two winding segments W1, W2 are wound from right to left in (a) of FIG. 10.

At each of the teeth A2, A3, the conductor wire is wound in a direction opposite to that of the conductor wire wound around the other one of the teeth A2, A3. Specifically, in (a) of FIG. 10, the conductor wire is wound around the tooth A3 in the counterclockwise direction with the number of turns Na, and is then wound around the tooth A2 in the clockwise direction with the number of turns Nb. In the second phase winding C2, one conductor wire end portion of the second phase winding C2, which forms a winding start side of the second phase winding C2, and another conductor wire end portion of the second phase winding C2, which forms a winding terminal side of the second phase winding C2, are pulled out from the segmented cores 61 in the axial direction and form a lead-out portion H21 and a lead-out portion H22, respectively, each of which extends a predetermined length from the corresponding segmented core 61.

The lead-out portion H21 at the winding start side is pulled out from the proximal end portion (the back yoke 33 side) of the tooth A3, and the lead-out portion H22 at the winding terminal side is pulled out from the proximal end portion (the back yoke 33 side) of the tooth A2. In this case, particularly, the lead-out portion H21 is pulled out in a state where the lead-out portion H21 is inserted into the groove 65a of the electrical insulation member 63 which corresponds to the tooth A3. Furthermore, the lead-out portion H22 is pulled out in a state where the lead-out portion H22 is inserted into the groove 65b of the electrical insulation member 63 which corresponds to the tooth A2.

A portion of the second phase winding C2, which is located between and couples the winding segment W1 wound around the tooth A3 and the winding segment W2 wound around the tooth A2, forms a link portion H23 that spans between these teeth A3, A2. This link portion H23 is not guided to the outside of the rising portion 63b of the electrical insulation member 63 unlike the link portion H13 of the first phase winding C1 and is set to span directly from the tooth A3 to the tooth A2.

With the above structure, the two lead-out portions H11, H12 of the first phase winding C1 and the two lead-out portions H21, H22 of the second phase winding C2 are arranged in the circumferential direction at the same radial position (i.e., at the proximal end portion of the corresponding respective teeth). Each of the teeth groups G1-G6 shown in FIG. 2 have the same winding structure as the winding structure described above.

As described above, in the first phase winding C1, the number of turns of the winding segment around the tooth A1 is Na, and the number of turns of the winding segment around the tooth A2 is Nb. Furthermore, in the second phase winding C2, the number of turns of the winding segment around the tooth A3 is Na, and the number of turns of the winding segment around the tooth A2 is Nb. The relationship between these numbers of turns is such that Na/2 < Nb. That is, in the present embodiment, the number of turns for each of the two teeth A1, A3, which are at two circumferentially opposite ends of the three teeth A1-A3 consecutively arranged in the circumferential direction, is Na, and the number of turns for the center tooth A2 is 2Nb. The relationship between them is Na < 2Nb. The upper limit of the number of turns Nb is, for example, the number of turns Na.

In this case, since the amount of conductor wire on the center tooth A2 (the common tooth) among the three teeth A1-A3 consecutively arranged in the circumferential direction is larger than that on each of the end teeth A1, A3, there is a concern that winding irregularities may occur at the time of winding the conductor wire around the common tooth. In this regard, according to the present embodiment, the lead-out positions of the conductor wire end portions of each phase winding are specified, and the link portion H13 of the first phase winding C1 (the pre-wound winding) is guided by the adjacent rising portions 63b of the electrical insulation members 63, and the conductor wire end portions are held by the grooves 65a of the electrical insulation members 63. The above arrangement limits inconveniences caused by the winding irregularities of the conductor wires.

As described above, in the winding structure where the plurality of windings are wound around the common tooth of the stator core 31, there are concerns that the terminal processing (terminal processing at the coil end) of each winding may possibly become more complex, and that the winding start end portion and the winding terminal end portion of the pre-wound winding may possibly interfere with the winding process of the post-wound winding. In the present embodiment, the winding structure improves these inconveniences, and the details of this winding structure are described below.

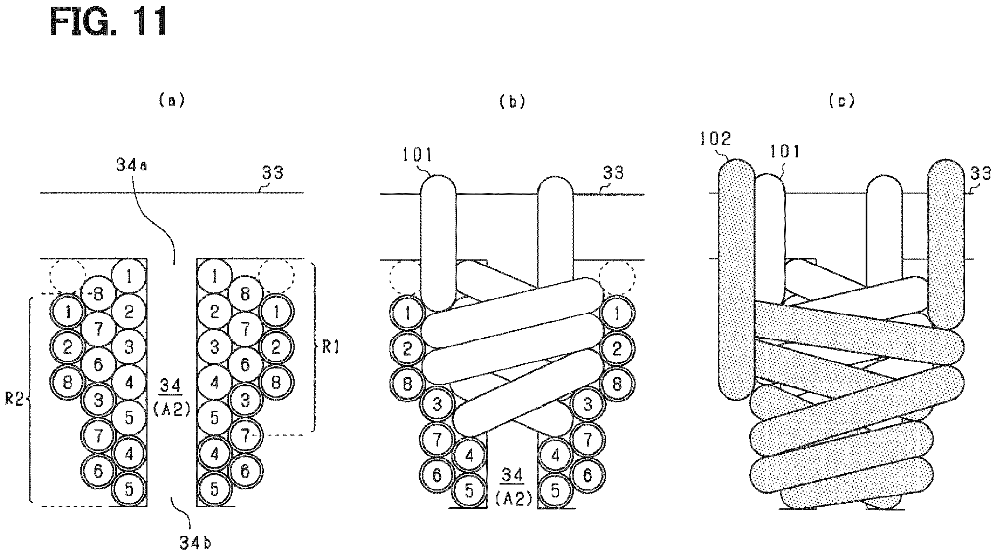

FIG. 11 is a diagram showing a winding order of conductor wires at the center tooth A2 of the tooth group G. Here, the winding segment of the first phase winding C1, which is wound around the tooth A2 is referred to as a first winding 101, and the winding segment of the second phase winding C2, which is wound around the tooth A2, is referred to as a second winding 102. For convenience of explanation, the first winding 101 is represented by a single circle, and the second winding 102 is represented by a double circle. In FIG. 11, the numbers assigned to each of the windings 101, 102 indicate the winding order, and each winding 101, 102 starts its winding at the position marked as No. 1 and finishes its winding at the position marked as No. 8. However, the number of turns is not limited to this. The left-right direction in the drawing represent the circumferential direction. Additionally, the up-down direction in the drawing represent the radial direction, and the up side in the drawing corresponding to the back yoke 33 side, i.e., the radially outer side (the outer peripheral side). Here, (b) of FIG. 11 shows a state where the first winding 101 is wound around tooth A2 (the tooth 34), and (c) of FIG. 11 shows a state where the second winding 102 is wound after the first winding 101 has been wound.

As shown in FIG. 11, the first winding 101 is wound around the tooth 34 in a state where the conductor wire of the first winding 101 is stacked in a plurality of layers in a first range R1 that extends from an end portion (a first end portion 34a) of the tooth 34, which is adjacent to the back yoke 33, to an intermediate position of the tooth 34 in the radial direction. In this case, the first winding 101 is wound such that a winding start position (i.e., a position of a single circle No. 1) of the first winding 101 is at the first end portion 34a of the tooth 34, and a winding terminal position (i.e., a position of a single circle No. 8) of the first winding 101 is where the conductor wire of the first winding 101 at the winding terminal position overlaps with the conductor wire of the first winding 101 at the winding start position of the first winding 101. As a result, the first winding 101 is more concentrated at one radial side of the tooth 34, and the two end portions (i.e., a winding start end portion and a winding terminal end portion) of the conductor wire of the first winding 101 are concentrated at the first end portion side of the tooth 34.

Furthermore, the second winding 102 is wound such that a winding start position (i.e., a position of a double circle No. 1) of the second winding 102 is on a radial side of the winding start position of the first winding 101 where a tooth center of the tooth 34, which is centered between two opposite radial ends of the tooth 34 in the radial direction, is placed, and the second winding 102 is wound from the winding start position of the second winding 102 toward the tooth center. In other words, the second winding 102 is wound around the tooth 34 a plurality of times in a second range R2 that extends in the radial direction from the other end portion (i.e., a second end portion 34b) of the tooth 34, which is opposite to the back yoke in the radial direction, to an overlapping position where the second winding 102 overlaps with the first winding 101. Here, the second winding 102 is wound around the tooth 34 such that the second winding 102 starts from the winding start position adjacent to the first end portion 34a, extends toward the second end portion 34b, and folds back at the second end portion 34b to wind the conductor wire of the second winding 102 in a plurality of layers over the tooth 34.

In this instance, the first winding 101 and the second winding 102 are wound around the tooth in a staggered arrangement in which the conductor wire (i.e., the round wire) of the first winding 101 and the conductor wire (i.e., the round wire) of the second winding 102 are staggered, and the second winding 102 is wound such that the winding start position of the second winding 102 is spaced from the first end portion 34a by an amount that corresponds to one turn of the conductor wire of the second winding 102. Additionally, in comparison of the radially inner side and the radially outer side, it is noted that the number of turns of the conductor wire in the radially outer side (the back yoke 33 side) is larger than the number of turns of the conductor wire in the radially inner side. However, it should be noted that the number of turns of the conductor wire in the radially outer side (the back yoke 33 side) and the number of turns of the conductor wire in the radially inner side may be set to be equal to each other.

According to the above configuration, since the winding start end portion and winding terminal end portion of the first winding 101 are concentrated on the first end portion side of the tooth 34, the inconvenience of the winding start end portion and the winding terminal end portion of the first winding 101 interfering with the winding process of the second winding 102 is limited.

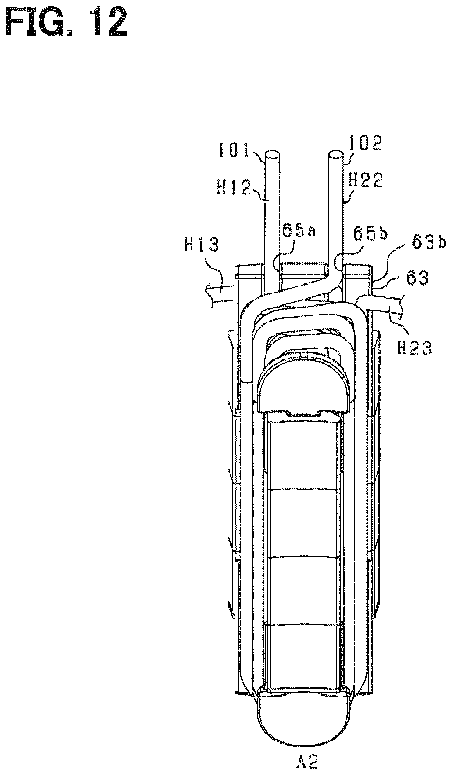

FIG. 12 is a perspective view showing the winding structure at the tooth A2. As shown in FIG. 12, the first winding 101 is wound in a state where the link portion H13 and the lead-out portion H12 are held by the grooves 65a, 65b of the electrical insulation member 63. The second winding 102 is wound so as to overlap with the first winding 101. In this case, the grooves 65a, 65b of the electrical insulation member 63 serve as holding portions that hold the link portion H13 and the lead-out portion H12 of the first winding 101.

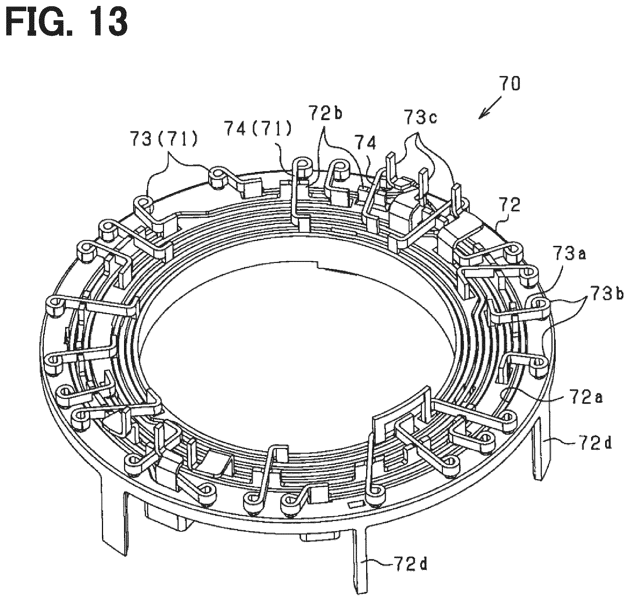

Hereinafter, a busbar module 70, which is installed on one axial end side of the stator 30, will be described. FIG. 13 is a perspective view of the busbar module 70.

The busbar module 70 includes: a plurality of busbars 71; and a busbar holder 72 that holds each of these busbars 71. The busbars 71 include: a plurality of phase-specific busbars 73, each provided for the corresponding phase of the first and second sets of stator windings 32a, 32b; and a plurality of neutral point busbars 74. Each of the phase-specific busbars 73 is a conductive member that connects the winding segments of the same phase together. Furthermore, each of the neutral point busbars 74 is a conductive member that connects the winding segments of each phase together in a star connection. In the present embodiment, six busbars, which include a U-phase busbar, a V-phase busbar, a W-phase busbar, an X-phase busbar, a Y-phase busbar and a Z-phase busbar, are provided as the phase-specific busbars 73. Additionally, two neutral point busbars 74 are provided as the neutral point busbar for the first set of stator windings 32a and the neutral point busbar for the second set of stator windings 32b. Here, there is exemplified the structure where the single neutral point is provided to each of the first set of stator windings 32a and the second set of stator windings 32b.

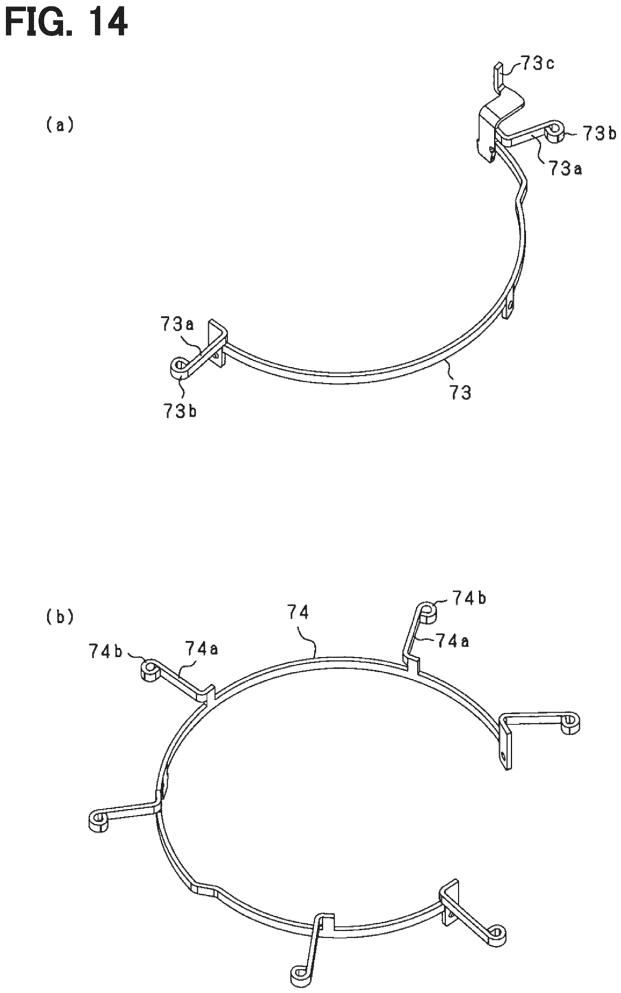

In FIG. 14, (a) is a perspective view showing a structure of one busbar which is the phase-specific busbar 73. Each phase-specific busbar 73 is shaped generally in an arcuate form as a whole, and an arm portion 73a, which radially extends, is formed at each of two opposite circumferential ends of the phase-specific busbar 73. A winding connector 73b, which is connected to a corresponding one of the phase windings, is formed at a distal end portion of each arm portion 73a. Additionally, an electric power terminal 73c for inputting/outputting the electric power is formed at the arcuate portion of the phase-specific busbar 73. As shown in FIG. 13, a radial length of the respective arm portions 73a and a circumferential position of the electric power terminal 73c differ for each phase-specific busbar 73.

In FIG. 14, (b) is a perspective view showing a structure of one busbar which is the neutral point busbar 74. Each neutral point busbar 74 is shaped generally in an arcuate form as a whole, and an arm portion 74a, which radially extends, is formed at a plurality of locations (six locations in the present embodiment) along a longitudinal direction of the neutral point busbar 74. A neutral point connector 74b, which is connected to a neutral point side end portion of the corresponding phase winding, is formed at a distal end portion of each arm portion 74a.

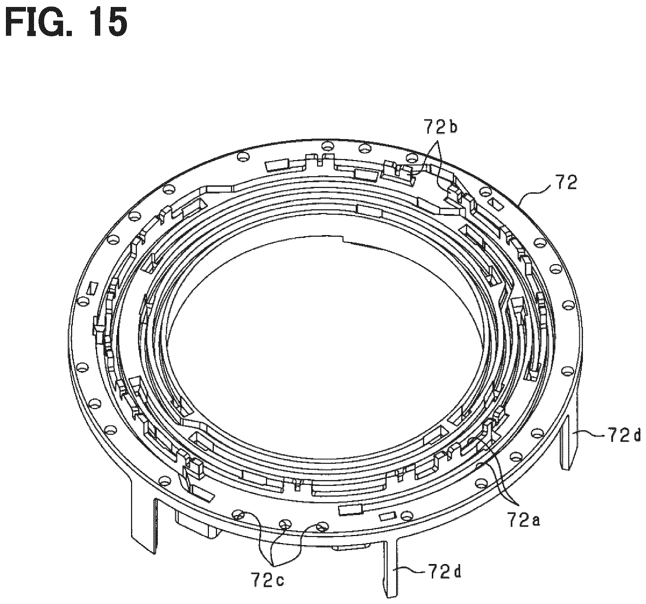

FIG. 15 is a perspective view showing a structure of the busbar holder 72. The busbar holder 72 is made of, for example, a dielectric resin material and is shaped in a circular ring form. The busbar holder 72 has a plurality of grooves 72a that respectively extend in an arcuate form in the circumferential direction. These grooves 72a are formed in a plurality of layers arranged in the radial direction, and each busbar 73, 74 is assembled in a corresponding one of the grooves 72a such that busbar plate surfaces of each radially adjacent two of the busbars 73, 74 face each other in the radial direction. Additionally, a plurality of projections 72b are formed at an upper surface of the busbar holder 72. Each of the projections 72b is a support portion that supports a corresponding one of the arm portions 73a, 74a of the busbars 73, 74. The projections 72b are dispersed in the circumferential direction according to the positions of the arm portions 73a, 74a.

A plurality of through-holes 72c, which extend through the busbar holder 72 in the axial direction (the up-down direction in the drawing), are formed at an outer periphery of the busbar holder 72, i.e., on the radially outer side of the grooves 72a. The through-holes 72c are insertion holes for inserting the lead-out portions which are the conductor wire end portions of the phase windings, i.e., the lead-out portions H11, H12, H21, H22 shown in (a) of FIG. 10. In this embodiment, the through-holes 72c, which are conductor wire connectors, are collectively provided at the outer periphery of the busbar holder 72 in the busbar module 70. Additionally, a plurality of installation portions 72d are formed at the busbar holder 72 for installing the busbar module 70 to the stator core 31.

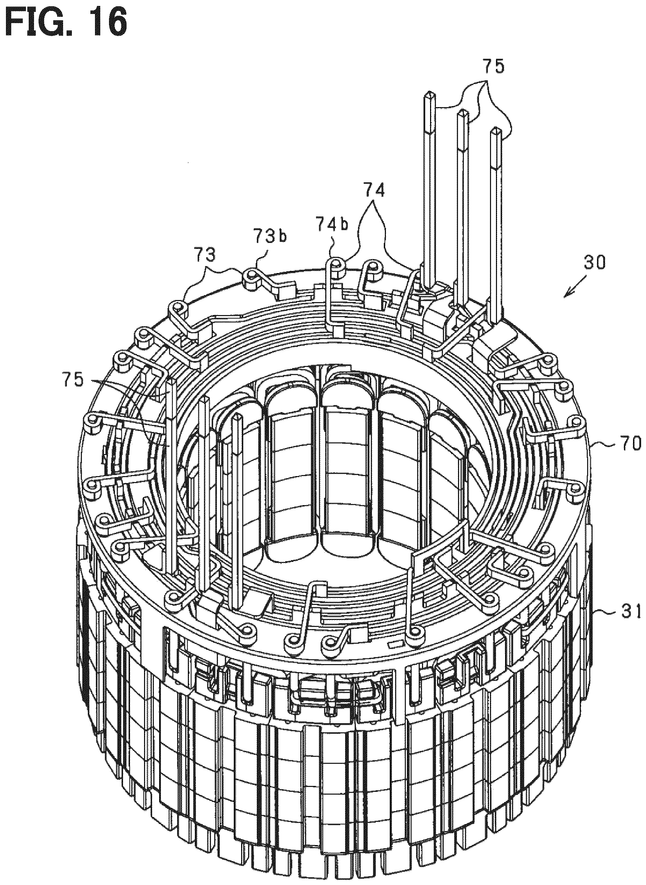

FIG. 16 is a perspective view showing a state where the busbar module 70 is installed to the stator 30. In FIG. 16, the busbar module 70 is installed coaxially with the stator core 31 at one axial end of the stator core 31.

The lead-out portions, which are the conductor wire end portions of the phase windings, are inserted through the through-holes 72c of the busbar holder 72 and are connected to the busbars 73, 74 at the upper surface of the busbar holder 72. Specifically, each of the conductor wire end portions of the phase windings is joined to the corresponding one of the connectors 73b, 74b of the busbars 73, 74 by welding or the like. As a result, at each set of stator windings 32a, 32b, the phase windings are connected to each other in the desired configuration. Additionally, the electric power lines 75 are connected to the electric power terminals 73c of the phase-specific busbars 73.

By the way, in the rotary electric machine, noise and vibration caused by torque ripple are disadvantageously generated. The torque ripple mainly consists of 6th harmonic components or 12th harmonic components, so it is desirable to suppress these. Therefore, it is desirable to perform the following control in the control device 50 using the electric motor 10 with the above configuration.

In the electric motor 10 of the above-described structure, the first tooth (T3, T6, T9, T12, T15, T18) of each tooth group is wound with the winding segment (a first coil body) of the corresponding one of the U-phase, V-phase and W-phase of the first set of stator windings 32a, and the second tooth (T2, T5, T8, T10, T14, T17) of each tooth group is wound with the winding segment (a second coil body) of the corresponding one of the U-phase, V-phase and W-phase of the first set of stator windings 32a and the winding segment (a second coil body) of the corresponding one of the X-phase, Y-phase and Z-phase of the second set of stator windings 32b, and the third tooth (T1, T4, T7, T10, T13, T16) of each tooth group is wound with the winding segment (a third coil body) of the corresponding one of the X-phase, Y-phase and Z-phase of the second set of stator windings 32b.

In this structure, a cumulative phase difference, which is a sum of each phase difference between a magnetomotive force generated by the winding segment of the corresponding phase of the first set of stator windings 32a wound around the second tooth and a magnetomotive force generated by the winding segment of the corresponding phase of the second set of stator windings 32b wound around the second tooth in each of the tooth groups, is set by the control device 50 such that each phase difference of the magnetomotive force of the second coil body of the corresponding phase relative to the magnetomotive force of the first coil body of the corresponding phase and each phase difference of the magnetomotive force of the third coil body of the corresponding phase relative to the magnetomotive force of the second coil body of the corresponding phase are within a predetermined phase range that includes 20 degrees in electrical angle, or each phase difference of the magnetomotive force of the third coil body of the corresponding phase relative to the magnetomotive force of the first coil body of the corresponding phase and each phase difference of the magnetomotive force of the second coil body of the corresponding phase relative to the magnetomotive force of the third coil body of the corresponding phase are within a predetermined phase range that includes 20 degrees in electrical angle. The cumulative phase difference is preferably set within, for example, a range of 72 to 88 degrees in electrical angle. Alternatively, the control device 50 may set a cumulative phase difference as a sum of each phase difference between the electric current flowing through the winding segment of the first set of stator windings 32a wound around the second tooth and the electric current flowing through the winding segment of the second set of stator windings 32b wound around the same second tooth in each of the tooth groups. The details of this control are described in JP7103299B2 filed by the applicant of this application.

The embodiment described above can achieve the following advantages.

In the structure where the first winding 101 and the second winding 102, which correspond to the two different phases, are wound as the stator windings 32 on the common tooth 34 of the stator core 31, there is a concern that the terminal processing (terminal processing at the coil end) of these windings 101, 102 may possibly become more complex. Additionally, there is a concern that the winding start end portion and the winding terminal end portion of the first winding 101 (i.e., the pre-wound winding) may interfere with the winding process of the second winding 102 (i.e., the post-wound winding). In this regard, at the tooth 34, around which the first winding 101 and the second winding 102 are wound, the first winding 101 is wound around the tooth 34 the plurality of times to form the plurality of layers of the conductor wire of the first winding 101 in the first range R1 that extends from the first end portion 34a of the tooth 34 to the intermediate position of the tooth in the radial direction. Therefore, the first winding 101 can be more concentrated at the one radial side of the tooth 34, and consequently, the end portions (i.e., the winding start end portion and the winding terminal end portion) of the conductor wire of the first winding 101 can be suitably concentrated at the first end portion 34a side of the tooth 34. As a result, the inconvenience caused by the winding start end portion and the winding terminal end portion of the first winding 101 (i.e., the pre-wound winding) interfering with the winding process of the second winding 102 (i.e., the post-wound winding) can be suppressed. Furthermore, the second winding 102 is wound around the tooth 34 in the second range R2 that extends in the radial direction from the second end portion 34b of the tooth 34 to the overlapping position where the second winding 102 overlaps with the first winding 101. Therefore, the second winding 102 can be wound closer to the first end portion 34a in the state where the second winding 102 overlaps with the first winding 101 while utilizing a vacant region around the tooth 34 where the first winding 101 is not wound. As a result, the end portions of the conductor wire of the second winding 102 can also be positioned closer to the first end portion 34a. As a result, it is possible to optimally wind the first winding 101 and the second winding 102 around the common tooth.

There is implemented the structure where the first winding 101 is wound such that the winding start position of the first winding 101 is at the first end portion 34a of the tooth 34, and the winding terminal position of the first winding 101 is where the conductor wire of the first winding 101 at the winding terminal position overlaps with the conductor wire of the first winding 101 at the winding start position of the first winding 101. With this structure, it is possible to achieve the appropriate configuration where the first winding 101 is concentrated at the one radial side of the tooth 34. Furthermore, the second winding 102 is wound such that the winding start position of the second winding 102 is on the radial side of the winding start position of the first winding 101 where the tooth center of the tooth 34, which is centered between the two opposite radial ends of the tooth 34 in the radial direction, is placed, and the second winding 102 is wound from the winding start position of the second winding 102 toward the tooth center. Thus, the second winding 102 can be optimally wound while avoiding interference with the end portions of the first winding 101.

In the structure where the round wires are used as the conductor wires, the space factor can be improved by winding the first winding 101 and the second winding 102 in the staggered arrangement. Additionally, according to the staggered arrangement of the round wires, it becomes relatively easy to adjust the radial position for the winding start position of the second winding, making it easy to implement the configuration where the winding start position of the second winding 102 is spaced from the first end portion 43a by the amount that corresponds to the one turn of the conductor wire of the second winding 102. As a result, the interference with the end portions of the first winding can be effectively avoided for the second winding.

Additionally, the second winding 102 is wound around the tooth 34 such that the second winding 102 starts from the winding start position adjacent to the first end portion 34a of the tooth 34, extends toward the second end portion 34b, and folds back at the second end portion 34b to wind the conductor wire of the second winding 102 in the plurality of layers over the tooth 34. As a result, similar to the first winding 101, the winding start and the winding terminal of the conductor wire of the second winding 102 can also be concentrated at the first end portion 34a side of the tooth 34. Therefore, the workability of terminal processing can be improved at the time of, for example, connecting a plurality of first windings 101, which constitute the stator windings 32, or connecting a plurality of second windings 102, which constitute the stator windings 32.

In the stator core 31, among the first to third teeth, which are consecutively arranged in the circumferential direction, the first phase winding C1 is wound continuously around the first tooth and the second tooth, and the second phase winding C2 is wound continuously around the second tooth and the third tooth. Furthermore, in the structure described above, the one end portion of the first phase winding C1 is pulled out from the radial end portion of the first tooth, which is adjacent to the back yoke 33, and the other end portion of the first phase winding C1 is pulled out from the radial end portion of the second tooth which is adjacent to the back yoke 33, and the one end portion of the second phase winding C2 is pulled out from the radial end portion of the third tooth, which is adjacent to the back yoke 33, and the other end portion of the second phase winding C2 is pulled out from the radial end portion of the second tooth which is adjacent to the back yoke 33 (see (a) and (b) of FIG. 10). This allows for the optimal implementation of connecting the conductor wire end portions of each phase winding to the electric power source and the neutral point while grouping each set of three teeth 34 together as one group. Furthermore, the first phase winding C1, which is the pre-wound winding, has the link portion H13, which extends between the first tooth and the second tooth along the back yoke 33 in the circumferential direction to continuously extend the first phase winding C1 between the first tooth and the second tooth. Therefore, the plurality of conductor wire end portions generated for the tooth basis are all processed at the back yoke 33 side.

In the structure where the first phase winding C1 is continuously wound around the first tooth A1 and the second tooth A2, which are adjacent to each other in the circumferential direction, the link portion H13, which extends from the first tooth A1, forms the winding start end portion of the first winding 101, and the other end portion of the first winding 101 is the winding terminal end portion of the first winding 101. In this case, the rising portion 63b formed at the back yoke 33 side of the electrical insulation members 63, 64 is used to hold the winding start end portion (the link portion H13) and the winding terminal end portion of the first winding 101. As a result, the winding start end portion and the winding terminal end portion of the first winding 101 can be held on the back yoke 33 side, thereby effectively avoiding interference during the winding of the second winding 102.

### (Other Embodiments)

The above embodiment may be modified, for example, as follows.

In the structure where the first winding 101 is wound in the first range R1, which extends from the first end portion 34a of the center tooth A2 (the tooth 34) of the tooth group G to the intermediate position of the center tooth A2 (the tooth 34) in the radial direction, there is a concern that the first winding 101 may collapse during the winding process. Therefore, the following configuration may be employed to limit the collapse of the first winding 101.

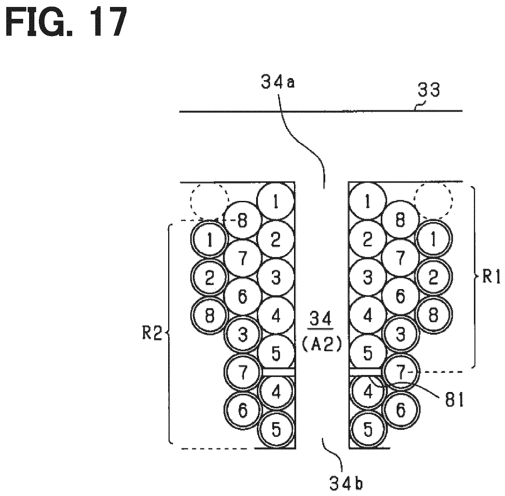

As shown in FIG. 17, the tooth may be provided with one or more projections (two projections in this instance) 81, each of which is placed at a boundary position of the first range R1 where the first winding 101 is wound, and this boundary position of the first range R1 is opposite to the first end portion 34a in the radial direction, and each projection 81 extends in a direction perpendicular to the radial direction and away from a tooth surface of the tooth 34. In other words, each projection 81 is provided at the position that serves as the boundary between the first winding 101 and the second winding 102 in the radial direction. The projection(s) 81 may, for example, be integrally formed with the electrical insulation member(s) 63, 64 and provided so as to extend in at least one of the axial direction and the circumferential direction from the tooth surface. However, the projection(s) 81 may be formed by the electromagnetic steel sheet(s) on the tooth 34. According to the above configuration, even in the structure where the first winding 101 is wound in the first range R1, which extends from the first end portion 34a of the tooth 34 to the intermediate position in the radial direction, the collapse of the first winding 101 can be effectively limited.

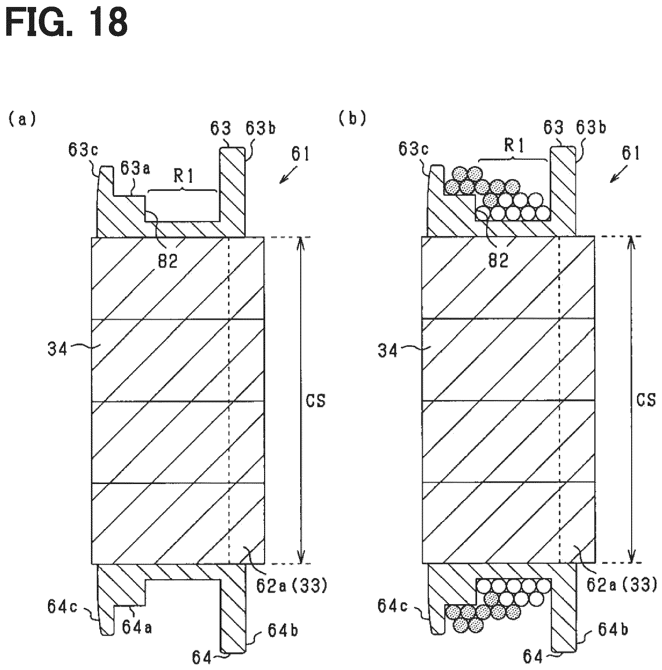

Additionally, in a configuration shown in (a) and (b) of FIG. 18, each of the electrical insulation members 63, 64 is provided with a stepped portion 82 on the covering portion 63a, 64a, which covers the axial end surface of the tooth 34, to differentiate the axial wall thickness dimensions between the first range R1 and a range outside the first range R1. In this case, the first range R1 is the winding range of the first winding 101 on the tooth 34, and the axial wall thickness dimension of the covering portion 63a, 64a in the first range R1 is reduced in comparison to the range outside the first range R1. In the segmented core 61, in relation to an axial end surface of a coil side CS, a height dimension, which is measured from the axial end surface of the coil side CS, is smaller in the first range R1 compared to the range outside the first range R1. A portion of each of the covering portions 63a, 64a, which is located in the first range R1, serves as a first insulation portion, and another portion of the covering portion 63a, 64a, which is located outside of the first range R1, serves as a second insulation portion.

In the above configuration, since the first range R1, in which the first winding 101 is wound, and the range outside the first range R1 are formed in the stepped manner on the segmented core 61, the collapse of the first winding 101 can be limited. Additionally, as described above, in the first range R1 of the tooth 34, both the first winding 101 and the second winding 102 are wound in the stacked state, and in the range outside the first range R1, only the second winding 102 is wound. In view of this point, the axial length dimension in the first range R1 can be limited with the above configuration from becoming excessively large compared to the range outside the first range R1, thereby achieving uniformity in the axial length dimension of the windings in the radial direction of the tooth 34.

In the configuration described above, the stepped portion 82 is provided to each of the electrical insulation members 63, 64 which are placed at the two opposite axial sides, respectively. Alternatively, the stepped portion 82 may be provided only to one of the electrical insulation members 63, 64.

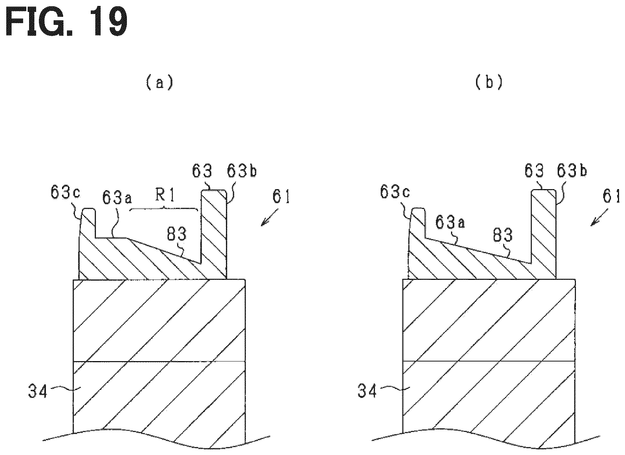

Additionally, as shown in (a) of FIG. 19, a section of the covering portion 63a of the electrical insulation member 63, which corresponds to the first range R1, may be formed as an inclined portion 83, a height of which decreases toward the back yoke 33 (the right side in the drawing). In this case, the first winding 101 can be wound in a state where the first winding 101 is more concentrated toward the rising portion 63b placed adjacent to the back yoke 33, thereby limiting the collapse of the first winding 101.

Additionally, as shown in (b) of FIG. 19, an entire region of the covering portion 63a of the electrical insulation member 63, on which the first winding 101 and the second winding 102 are wound, may be formed as the inclined portion 83, the height of which decreases toward the back yoke 33 (the right side in the drawing). The configuration of FIG. 17, in which the projection(s) 81 is provided at the boundary position of the first range R1, may be combined with each of the configurations shown in (a) and (b) of FIG. 18 and (a) and (b) of FIG. 19. For example, the projection 81 may be provided to the electrical insulation member(s) 63, 64 such that the projection 81 projects from a circumferential side surface(s) of the electrical insulation member(s) 63, 64 in the circumferential direction.

In each of the stator windings 32, the conductor wire may be formed by a plurality of wires arranged in parallel, and this conductor wire may be wound around the corresponding tooth. In this case, by reducing a wire thickness of the conductor wire, the collapse of the first winding 101 can be limited.

In the above embodiment, the first phase winding C1, which is the pre-wound winding, is wound such that the two winding segments of the first phase winding C1 are wound around in the order of the first tooth and then the second tooth. However, this configuration may be modified such that the two winding segments of the first phase winding C1 are wound around in the order of the second tooth and then the first tooth. Furthermore, in the above embodiment, the second phase winding C2, which is the post-wound winding, is wound such that the two winding segments of the second phase winding C2 are wound around in the order of the third tooth and then the second tooth. However, this configuration may be modified such that the two winding segments of the second phase winding C2 are wound around in the order of the second tooth and then the third tooth.

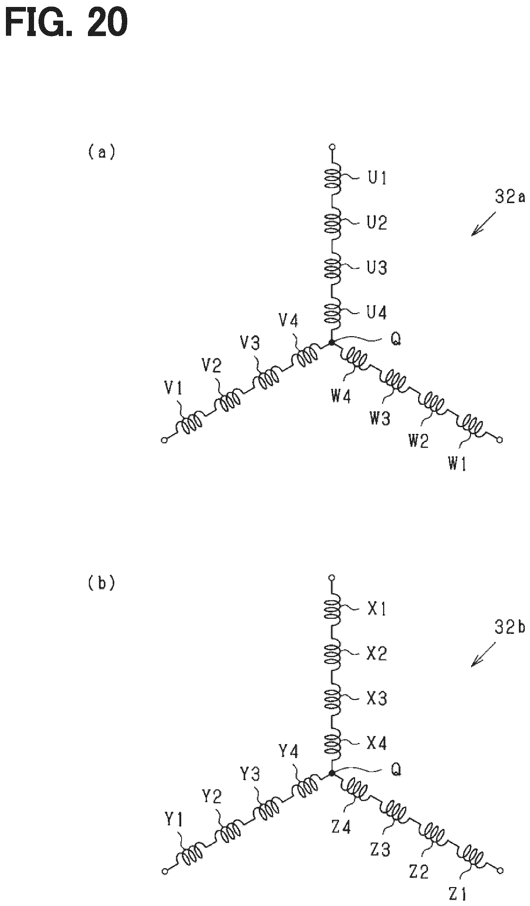

In the above embodiment, as shown in (a) of FIG. 7, the first set of stator windings 32a are configured such that the winding segments U1-U4, V1-V4, W1-W4 of each phase are divided into the two groups each including corresponding two of the winding segments U1-U4, V1-V4, W1-W4, and these winding segments U1-U4, V1-V4, W1-W4 are connected by the star connection. However, this structure may be modified. For example, as shown in (a) of FIG. 20, the first set of stator windings 32a may be configured such that the winding segments U1-U4, V1-V4, W1-W4 of each phase may be connected in series, and the three series-connected phase windings may be connected by a star connection. Furthermore, as shown in (b) of FIG. 20, the second set of stator windings 32b may be configured such that the winding segments X1-X4, Y1-Y4, Z1-Z4 of each phase may be connected in series, and the three series-connected phase windings may be connected by a star connection.

In each set of stator windings 32a, 32b, it is also possible to connect the phase windings using a delta connection (Δ connection) instead of the star connection (Y connection).

In the stator core 31, each segmented core 61 may have a plurality of teeth 34. For example, each segmented core 61 may have three teeth 34. Additionally, the stator core 31 may have a non-segmented structure, i.e., an integrally formed circular ring form that is not divided in the circumferential direction.

The number of teeth in the stator core 31 may be other than eighteen (18). However, in this case, the number of teeth is preferably 3×n, where n is an integer.

In the above embodiment, the stator windings 32 include the first set of stator windings 32a and the second set of stator windings 32b and thereby include the total of the six phase windings for the six phases. However, this can be modified such that the stator windings 32 include only one set of three phase windings for three phases.

The rotary electric machine may be an outer rotor type instead of the inner rotor type. In the outer rotor type rotary electric machine, the back yoke 33 is positioned on the radially inner side of the stator core 31, and the teeth 34 project radially outward from the back yoke 33. In this case, each of the winding start end portion and the winding terminal end portion of each of the first winding 101 and the second winding 102 may be placed at the proximal end portion of the corresponding tooth 34 (the back yoke 33 side).

Technical aspects, which are obtained based on the embodiments described above, will be recited below.

### (Configuration 1)

According to configuration 1, there is provided a stator (30) including:
a stator core (31) that includes:
   a back yoke (33) that is shaped in a circular ring form; and
   a plurality of teeth (34) that radially extend from the back yoke and are arranged at predetermined intervals in a circumferential direction; and
a plurality of stator windings (32) that are provided for a plurality of phases, wherein the plurality of stator windings are formed by a plurality of conductor wires, respectively, which are wound on the plurality of teeth using concentrated winding, wherein:
   among the plurality of stator windings, a first winding (101) and a second winding (102), which are respectively provided for two different phases among the plurality of phases, are wound around a predetermined tooth among the plurality of teeth, wherein the first winding is a pre-wound winding, which is wound first around the predetermined tooth, and the second winding is a post-wound winding, which is wound later around the predetermined tooth after the pre-wound winding;
   at the predetermined tooth, around which the first winding and the second winding are wound, the first winding is wound around the predetermined tooth a plurality of times to form a plurality of layers of the conductor wire of the first winding in a first range that extends from a first end portion of the predetermined tooth, which faces radially inward or radially outward, to an intermediate position of the predetermined tooth in a radial direction, and the second winding is wound around the predetermined tooth a plurality of times in a second range that extends in the radial direction from a second end portion of the predetermined tooth, which is opposite to the first end portion in the radial direction, to an overlapping position where the second winding overlaps with the first winding; and
   a winding start end portion and a winding terminal end portion of the conductor wire of the first winding are placed at the first end portion of the predetermined tooth, and the second winding is wound such that a portion of the second winding overlaps with the first winding.

### (Configuration 2)

According to configuration 2, there is provided the stator according to configuration 1, wherein:
the first winding is wound such that a winding start position of the first winding is at the first end portion, and a winding terminal position of the first winding is where the conductor wire of the first winding at the winding terminal position overlaps with the conductor wire of the first winding at the winding start position of the first winding; and
the second winding is wound such that a winding start position of the second winding is on a radial side of the winding start position of the first winding where a tooth center of the predetermined tooth, which is centered between two opposite radial ends of the predetermined tooth in the radial direction, is placed, and the second winding is wound from the winding start position of the second winding toward the tooth center.

### (Configuration 3)

According to configuration 3, there is provided the stator according to configuration 2, wherein:
each of the plurality of conductor wires is a round wire with a circular-cross section, and the first winding and the second winding are wound around the predetermined tooth in a staggered arrangement in which the conductor wire of the first winding and the conductor wire of the second winding are staggered; and
the second winding is wound such that the winding start position of the second winding is spaced from the first end portion by an amount that corresponds to one turn of the conductor wire of the second winding.

### (Configuration 4)

According to configuration 4, there is provided the stator according to configuration 2 or 3, wherein the second winding is wound around the predetermined tooth such that the second winding starts from the winding start position adjacent to the first end portion, extends toward the second end portion, and folds back at the second end portion to wind the conductor wire of the second winding in a plurality of layers over the predetermined tooth.

### (Configuration 5)

According to configuration 5, there is provided the stator according to any one of configurations 1 to 4, wherein the predetermined tooth is provided with a projection (81) which is placed at a boundary position of the first range where the first winding is wound, wherein the boundary position of the first range is opposite to the first end portion in the radial direction, and the projection extends in a direction perpendicular to the radial direction and away from a tooth surface of the predetermined tooth.

### (Configuration 6)

According to configuration 6, there is provided the stator according to any one of configurations 1 to 5, wherein:
at least one electrical insulation member (63, 64) is placed on at least one of two opposite axial end portions of the predetermined tooth, and the first winding and the second winding are wound in a state where the at least one electrical insulation member is interposed between the predetermined tooth and each of the first winding and the second winding; and
the at least one electrical insulation member has a first insulation portion, which corresponds to the first range in the radial direction, and a second insulation portion, which is a portion of the at least one electrical insulation member located outside of the first range, and an axial wall thickness dimension of the first insulation portion and an axial wall thickness dimension of the second insulation portion are set differently such that the axial wall thickness dimension of the first insulation portion is smaller than the axial wall thickness dimension of the second insulation portion.

### (Configuration 7)

According to configuration 7, there is provided the stator according to any one of configurations 1 to 6, wherein:
the plurality of stator windings include a plurality of phase windings, each of which is provided for a corresponding one of the plurality of phases and is wound around corresponding two or more of the plurality of teeth using the concentrated winding;
three teeth among the plurality of teeth, which are consecutively arranged in the circumferential direction in the stator core, are defined as a first tooth, a second tooth and a third tooth, wherein a first phase winding (C1) among the plurality of phase windings is wound continuously around the first tooth and the second tooth, and a second phase winding (C2) among the plurality of phase windings is wound continuously around the second tooth and the third tooth, and thereby the second tooth is wound with the first phase winding and the second phase winding;
one end portion of the first phase winding is pulled out from one of two opposite radial end portions of the first tooth, which is adjacent to the back yoke, and another end portion of the first phase winding is pulled out from one of two opposite radial end portions of the second tooth which is adjacent to the back yoke;
one end portion of the second phase winding is pulled out from one of two opposite radial end portions of the third tooth, which is adjacent to the back yoke, and another end portion of the second phase winding is pulled out from the one of the two opposite radial end portions of the second tooth which is adjacent to the back yoke; and
among the first phase winding and the second phase winding, the first phase winding is a pre-wound winding, which is wound first at a time of winding the first phase winding and the second phase winding, and the second phase winding is a post-wound winding, which is wound later after the pre-wound winding, wherein the first phase winding has a link portion (H13), which extends between the first tooth and the second tooth along the back yoke in the circumferential direction to continuously extend the first phase winding between the first tooth and the second tooth.

### (Configuration 8)

According to configuration 8, there is provided the stator according to configuration 7, wherein:
at least one electrical insulation member (63) is placed on at least one of two opposite axial end portions of the stator core and is configured to electrically insulate between one or more of the plurality of teeth and one or more of the plurality of stator windings;
the at least one electrical insulation member (63) has at least one rising portion (63b), wherein the at least one rising portion is placed on the one or more of the plurality of teeth at a location adjacent to the back yoke and axially extends; and
the at least one rising portion has a plurality of holding portions (65a, 65b) that hold:
   the link portion, which forms one end portion among a winding start end portion and a winding terminal end portion of the first phase winding wound around the second tooth; and
   another end portion among the winding start end portion and the winding terminal end portion of the first phase winding.

Although the present disclosure has been described with reference to the embodiments and the modifications, it is understood that the present disclosure is not limited to the embodiments and the modifications and structures described therein. The present disclosure also includes various variations and variations within the equivalent range. Also, various combinations and forms, as well as other combinations and forms that include only one element, more, or less, are within the scope and ideology of the present disclosure.

## Claims

1. A stator (30) comprising:
a stator core (31) that includes:
a back yoke (33) that is shaped in a circular ring form; and
a plurality of teeth (34) that radially extend from the back yoke and are arranged at predetermined intervals in a circumferential direction; and
a plurality of stator windings (32) that are provided for a plurality of phases, wherein the plurality of stator windings are formed by a plurality of conductor wires, respectively, which are wound on the plurality of teeth using concentrated winding, wherein:
among the plurality of stator windings, a first winding (101) and a second winding (102), which are respectively provided for two different phases among the plurality of phases, are wound around a predetermined tooth among the plurality of teeth, wherein the first winding is a pre-wound winding, which is wound first around the predetermined tooth, and the second winding is a post-wound winding, which is wound later around the predetermined tooth after the pre-wound winding;
at the predetermined tooth, around which the first winding and the second winding are wound, the first winding is wound around the predetermined tooth a plurality of times to form a plurality of layers of the conductor wire of the first winding in a first range that extends from a first end portion of the predetermined tooth, which faces radially inward or radially outward, to an intermediate position of the predetermined tooth in a radial direction, and the second winding is wound around the predetermined tooth a plurality of times in a second range that extends in the radial direction from a second end portion of the predetermined tooth, which is opposite to the first end portion in the radial direction, to an overlapping position where the second winding overlaps with the first winding; and
a winding start end portion and a winding terminal end portion of the conductor wire of the first winding are placed at the first end portion of the predetermined tooth, and the second winding is wound such that a portion of the second winding overlaps with the first winding.

2. The stator according to claim 1, wherein:
the first winding is wound such that a winding start position of the first winding is at the first end portion, and a winding terminal position of the first winding is where the conductor wire of the first winding at the winding terminal position overlaps with the conductor wire of the first winding at the winding start position of the first winding; and
the second winding is wound such that a winding start position of the second winding is on a radial side of the winding start position of the first winding where a tooth center of the predetermined tooth, which is centered between two opposite radial ends of the predetermined tooth in the radial direction, is placed, and the second winding is wound from the winding start position of the second winding toward the tooth center.

3. The stator according to claim 2, wherein:
each of the plurality of conductor wires is a round wire with a circular-cross section, and the first winding and the second winding are wound around the predetermined tooth in a staggered arrangement in which the conductor wire of the first winding and the conductor wire of the second winding are staggered; and
the second winding is wound such that the winding start position of the second winding is spaced from the first end portion by an amount that corresponds to one turn of the conductor wire of the second winding.

4. The stator according to claim 2, wherein the second winding is wound around the predetermined tooth such that the second winding starts from the winding start position adjacent to the first end portion, extends toward the second end portion, and folds back at the second end portion to wind the conductor wire of the second winding in a plurality of layers over the predetermined tooth.

5. The stator according to claim 1, wherein the predetermined tooth is provided with a projection (81) which is placed at a boundary position of the first range where the first winding is wound, wherein the boundary position of the first range is opposite to the first end portion in the radial direction, and the projection extends in a direction perpendicular to the radial direction and away from a tooth surface of the predetermined tooth.

6. The stator according to claim 1, wherein:
at least one electrical insulation member (63, 64) is placed on at least one of two opposite axial end portions of the predetermined tooth, and the first winding and the second winding are wound in a state where the at least one electrical insulation member is interposed between the predetermined tooth and each of the first winding and the second winding; and
the at least one electrical insulation member has a first insulation portion, which corresponds to the first range in the radial direction, and a second insulation portion, which is a portion of the at least one electrical insulation member located outside of the first range, and an axial wall thickness dimension of the first insulation portion and an axial wall thickness dimension of the second insulation portion are set differently such that the axial wall thickness dimension of the first insulation portion is smaller than the axial wall thickness dimension of the second insulation portion.

7. The stator according to any one of claims 1 to 6, wherein:
the plurality of stator windings include a plurality of phase windings, each of which is provided for a corresponding one of the plurality of phases and is wound around corresponding two or more of the plurality of teeth using the concentrated winding;
three teeth among the plurality of teeth, which are consecutively arranged in the circumferential direction in the stator core, are defined as a first tooth, a second tooth and a third tooth, wherein a first phase winding (C1) among the plurality of phase windings is wound continuously around the first tooth and the second tooth, and a second phase winding (C2) among the plurality of phase windings is wound continuously around the second tooth and the third tooth, and thereby the second tooth is wound with the first phase winding and the second phase winding;
one end portion of the first phase winding is pulled out from one of two opposite radial end portions of the first tooth, which is adjacent to the back yoke, and another end portion of the first phase winding is pulled out from one of two opposite radial end portions of the second tooth which is adjacent to the back yoke;
one end portion of the second phase winding is pulled out from one of two opposite radial end portions of the third tooth, which is adjacent to the back yoke, and another end portion of the second phase winding is pulled out from the one of the two opposite radial end portions of the second tooth which is adjacent to the back yoke; and
among the first phase winding and the second phase winding, the first phase winding is a pre-wound winding, which is wound first at a time of winding the first phase winding and the second phase winding, and the second phase winding is a post-wound winding, which is wound later after the pre-wound winding, wherein the first phase winding has a link portion (H13), which extends between the first tooth and the second tooth along the back yoke in the circumferential direction to continuously extend the first phase winding between the first tooth and the second tooth.

8. The stator according to claim 7, wherein:
at least one electrical insulation member (63) is placed on at least one of two opposite axial end portions of the stator core and is configured to electrically insulate between one or more of the plurality of teeth and one or more of the plurality of stator windings;
the at least one electrical insulation member (63) has at least one rising portion (63b), wherein the at least one rising portion is placed on the one or more of the plurality of teeth at a location adjacent to the back yoke and axially extends; and
the at least one rising portion has a plurality of holding portions (65a, 65b) that hold:
the link portion, which forms one end portion among a winding start end portion and a winding terminal end portion of the first phase winding wound around the second tooth; and
another end portion among the winding start end portion and the winding terminal end portion of the first phase winding.
